# EUROPEAN PATENT SPECIFICATION

(11) **EP 4 393 624 B1**
(45) Date of publication and mention of the grant of the patent: **11.06.2025**
(21) Application number: 22216751.2
(22) Date of filing: 27.12.2022
(51) Int. Cl.: B23F 19/10, B23F 21/20

(54) **MILLING TOOL AND METHOD FOR CHAMFERING FLANK EDGES OF TEETH ON A CYLINDRICAL TOOTHED WORKPIECE**
FRÄSWERKZEUG UND VERFAHREN ZUM ANFASEN VON FLANKENKANTEN VON ZÄHNEN AN EINEM ZYLINDERFÖRMIGEN VERZAHNTEN WERKSTÜCK
OUTIL DE FRAISAGE ET PROCÉDÉ DE CHANFREINAGE DES BORDS DE FLANC DE DENTS D'UNE PIÈCE À USINER DENTÉE CYLINDRIQUE

(43) Date of publication of application: 03.07.2024
(73) Proprietor: AB Sandvik Coromant, 811 81 Sandviken (SE)
(72) Inventor: Mohanty, Swetapadma, 811 81 Sandviken (SE); Jia, Tong, 811 81 Sandviken (SE); Bosch, Achim, 811 81 Sandviken (SE)
(74) Representative: Sandvik

(56) References cited:
- WO-A1-2022/013068
- DE-A1- 4 400 887

## Description

### FIELD OF THE INVENTION AND PRIOR ART

The present invention relates to a milling tool according to the preamble of claim 1 for chamfering flank edges of internal or external teeth on a cylindrical toothed workpiece at at least one of two opposite end faces of the workpiece. The invention also relates to a method for chamfering such flank edges.

External or internal gear teeth or spline teeth may be machined on a cylindrical workpiece by cutting technologies using different types of cutting tools. In such a case, the resulting teeth on the workpiece will have burrs and sharp edges at the intersections between the tooth flank surfaces of the teeth and the respective end face of the workpiece following the initial machining operation, i.e. at the flank edges of the teeth at the opposite end faces of the workpiece. A subsequent finishing operation may therefore be required in order to chamfer the flank edges of the teeth at the opposite end faces of the workpiece and thereby remove said burrs and sharp edges.

WO 2022/013068 A1 discloses a method for chamfering flank edges of teeth on a cylindrical toothed workpiece at an end face of the workpiece by means of a milling tool, wherein the workpiece and the milling tool are rotated with a predefined relationship between the speed of rotation of the milling tool and the speed of rotation of the workpiece, while keeping the axis of rotation of the milling tool in parallel with the central axis of the workpiece. In the method according to WO 2022/013068 A1, the flank edges are chamfered in such a manner that a first flank edge on a tooth is chamfered in a direction from the tooth tip to the tooth root of the tooth, whereupon an opposite second flank edge on an adjacent tooth is chamfered in a direction from the tooth root to the tooth tip of the tooth. During the chamfering of the flank edges at one of the end faces of the workpiece, the milling tool is moved in different predefined directions in a plane perpendicular to the central axis of the workpiece to thereby change the mutual position between the axis of rotation of the milling tool and the central axis of the workpiece during the chamfering operation. The milling tool disclosed in WO 2022/013068 A1 is configured to be moved into contact with a forwardly facing end face of the workpiece. When the flank edges at a forwardly facing first end face of the workpiece have been chamfered, the workpiece has to be repositioned in the workpiece holder to make the opposite second end face of the workpiece face forwards towards the milling tool before proceeding with a chamfering of the flank edges at this second end face of the workpiece.

### OBJECT OF THE INVENTION

The object of the present invention is to provide a milling tool of the above-mentioned type that has a new and favourable design.

### SUMMARY OF THE INVENTION

According to a first aspect of the invention, said object is achieved by means of a milling tool having the features defined in claim 1.

The milling tool according to the first aspect of the invention comprises a tool body, which at a rear end has a rear part configured for attachment to a machine in order to allow the tool body to be rotated by the machine about an axis of rotation of the tool body, wherein the tool body comprises a cutting part located in front of the rear part as seen in an axial direction of the tool body, and wherein the milling tool comprises at least one cutting insert mounted to the cutting part.

Said at least one cutting insert is provided with at least a first cutting edge and a second cutting edge extending in a common extension plane, which is parallel to a longitudinal plane that contains the axis of rotation, wherein the first cutting edge and the second cutting edge are located opposite each other on opposite sides of a radial plane that contains the axis of rotation and is perpendicular to said longitudinal plane, and wherein:
- the first cutting edge has a rear end and an opposite front end, the rear end of the first cutting edge being located closer to the rear part of the tool body than the front end of the first cutting edge, wherein the front end of the first cutting edge is located closer to said radial plane than the rear end of the first cutting edge and the distance between the first cutting edge and said radial plane is gradually increasing as seen in a direction along the first cutting edge from the front end thereof to the rear end thereof, and
- the second cutting edge has a rear end and an opposite front end, the rear end of the second cutting edge being located closer to the rear part of the tool body than the front end of the second cutting edge, wherein the front end of the second cutting edge is located closer to said radial plane than the rear end of the second cutting edge and the distance between the second cutting edge and said radial plane is gradually increasing as seen in a direction along the second cutting edge from the front end thereof to the rear end thereof.

Furthermore, said at least one cutting insert has a rake face with one or more rake surfaces for the first and second cutting edges, wherein this rake face faces radially outward away from the axis of rotation.

The arrangement of the first and second cutting edges and the rake face on the cutting part as defined above imply that the milling tool may be used for chamfering the flank edges of internal or external teeth on a cylindrical toothed workpiece at an end face thereof in a manner described in closer detail below. First flank edges on a first side of the teeth may be chamfered at a first end face of the workpiece by the first cutting edge during rotation of the milling tool in a first direction of rotation without requiring any movement of the milling tool in a plane perpendicular to the central axis of the workpiece during the chamfering of these first flank edges, and second flank edges on an opposite second side of the teeth may be chamfered at the same end face of the workpiece by the second cutting edge during rotation of the milling tool in an opposite second direction of rotation without requiring any movement of the milling tool in a plane perpendicular to the central axis of the workpiece during the chamfering of these second flank edges, wherein the cutting forces on the milling tool during the chamfering operations will be directed substantially towards the axis of rotation of the tool body, which is favourable with respect to the durability of the milling tool.

The above-mentioned internal or external teeth on the workpiece are preferably gear teeth or spline teeth.

According to an embodiment of the invention, said rake face is planar and extends in the same extension plane as the first and second cutting edges, which facilitates the manufacturing of the cutting insert. However, the rake face may as an alternative comprise rake surfaces laying below and/or above this extension plane.

The first and second cutting edges are preferably rectilinear, or at least substantially rectilinear, wherein the first cutting edge and the second cutting edge extend at a first angle and a second angle, respectively, to said radial plane. The first and second cutting edges may have such inclinations that said first and second angles differ from each other. However, the first and second cutting edges preferably have such inclinations that said first and second angles are substantially equal. Said first and second angles are with advantage larger than or equal to 15° and smaller than 85°, preferably 20-80°.

According to another embodiment of the invention, the first cutting edge and the second cutting edge are mirror symmetrical to each other with respect to said radial plane. The cutting performance of the first cutting edge when the milling tool is rotated in a first direction of rotation and chamfering is performed by the first cutting edge will hereby be the same as the cutting performance of the second cutting edge when the milling tool is rotated in the opposite direction of rotation and chamfering is performed by the second cutting edge.

Another embodiment of the invention is characterized in:
- that said at least one cutting insert is also provided with a third cutting edge and a fourth cutting edge extending in the same extension plane as the first and second cutting edges, wherein the third cutting edge and the fourth cutting edge are located opposite each other on opposite sides of said radial plane, and wherein:
   - the third cutting edge has a rear end and an opposite front end, the rear end of the third cutting edge being located closer to the rear part of the tool body than the front end of the third cutting edge, wherein the rear end of the third cutting edge is located closer to said radial plane than the front end of the third cutting edge and the distance between the third cutting edge and said radial plane is gradually increasing as seen in a direction along the third cutting edge from the rear end thereof to the front end thereof, and
   - the fourth cutting edge has a rear end and an opposite front end, the rear end of the fourth cutting edge being located closer to the rear part of the tool body than the front end of the fourth cutting edge, wherein the rear end of the fourth cutting edge is located closer to said radial plane than the front end of the fourth cutting edge and the distance between the fourth cutting edge and said radial plane is gradually increasing as seen in a direction along the fourth cutting edge from the rear end thereof to the front end thereof; and
- that said rake face is provided with one or more rake surfaces also for the third and fourth cutting edges.

The milling tool may hereby be used for chamfering the flank edges of internal or external teeth on a cylindrical toothed workpiece at both end faces of the workpiece without requiring any repositioning of the workpiece. Thus, the workpiece may remain clamped to a suitable workpiece holder of the machine in one and the same orientation during the entire chamfering process, which saves time. The above-mentioned first and second cutting edges may be used for chamfering the flank edges of the teeth on a toothed workpiece at a first end face of the workpiece that faces away from a workpiece holder that carries the workpiece in a rotatable manner, and the above-mentioned third and fourth cutting edges may be used for chamfering the flank edges of the teeth on the workpiece at an opposite second end face of the workpiece. The chamfering process may start with a chamfering of the flank edges at the end face of the workpiece that faces away from the workpiece holder and thereafter proceed with a chamfering of the flank edges at the end face of the workpiece that faces the workpiece holder. As an alternative, the chamfering process may start with a chamfering of the flank edges at the end face of the workpiece that faces the workpiece holder and thereafter proceed with a chamfering of the flank edges at the end face of the workpiece that faces away from the workpiece holder. Third flank edges on a first side of the teeth may be chamfered at said second end face of the workpiece by the third cutting edge during rotation of the milling tool in a first direction of rotation without requiring any movement of the milling tool in a plane perpendicular to the central axis of the workpiece during the chamfering of these third flank edges, and flank edges on an opposite second side of the teeth may be chamfered at the same end face of the workpiece by the fourth cutting edge during rotation of the milling tool in an opposite second direction of rotation without requiring any movement of the milling tool in a plane perpendicular to the central axis of the workpiece during the chamfering of these fourth flank edges, wherein the cutting forces on the milling tool during the chamfering operations performed by means of the third and fourth cutting edges will be directed substantially towards the axis of rotation of the tool body, which is favourable with respect to the durability of the milling tool.

The third cutting edge and the fourth cutting edge are preferably mirror symmetrical to each other with respect to said radial plane. The cutting performance of the third cutting edge when the milling tool is rotated in a first direction of rotation and chamfering is performed by the third cutting edge will hereby be the same as the cutting performance of the fourth cutting edge when the milling tool is rotated in the opposite direction of rotation and chamfering is performed by the fourth cutting edge.

Another embodiment of the invention is characterized in:
- that the first cutting edge and the third cutting edge are mirror symmetrical to each other with respect to a plane of symmetry that extends halfway between the first and third cutting edges perpendicularly to said radial plane and perpendicularly to said extension plane; and
- that also the second cutting edge and the fourth cutting edge are mirror symmetrical to each other with respect to said plane of symmetry.

According to another embodiment of the invention, said at least one cutting insert comprises a base part and an extension arm fixed to and projecting from the base part, wherein the extension arm has an inner end facing the base part and an opposite outer end, said cutting edges and said rake face being arranged on the extension arm at the outer end thereof, and wherein the base part is configured to be received in an insert seat in the cutting part and the extension arm is configured to project from the cutting part in radial direction in relation to the axis of rotation when the cutting insert is mounted to the cutting part. The length of the extension arm is to be suitably adapted to the tooth depth of the teeth on the toothed workpiece to be machined and is suitably 1-20 mm, preferably 1-15 mm, and more preferably 3-9 mm.

The cutting insert is preferably releasably mounted to said insert seat. Hereby, a cutting insert may easily be replaced by a new one when any of the cutting edges on the cutting insert has been worn out.

Another embodiment of the invention is characterized in:
- that the tool body comprises an elongated shank part, which carries the cutting part and extends from the cutting part towards the rear part and which has a front end facing the cutting part, an opposite rear end and a peripheral surface extending around the shank part between the rear end and the front end thereof, wherein the shank part has a longitudinal central axis that coincides with the axis of rotation of the tool body; and
- that the inner end of the extension arm is located at a longer distance from the axis of rotation than a radially outermost part of the peripheral surface of the shank part when the cutting insert is mounted to the cutting part.

The shank part is preferably rod-shaped and is to be longer than the length of the workpiece, i.e. longer than the axial distance between the two opposite end faces of the workpiece. The shank part may for instance have a length of 50-200 mm, preferably 100-150 mm.

According to another embodiment of the invention, the cutting part is slidably mounted to the shank part at the front end thereof so as to be linearly slidable in relation to the shank part perpendicularly to the axis of rotation and in a longitudinal direction of the extension arm, wherein the cutting part is lockable to the shank part in different sliding positions in relation to the shank part to thereby allow an adjustment of the radial distance between said extension plane and the axis of rotation. However, the cutting part and the shank part may as an alternative be formed in one piece.

According to another embodiment of the invention, the cutting part comprises a disc-shaped or cylindrical base with a central axis that coincides with the axis of rotation and at least one extension arm fixed to the base and projecting from the base in radial direction in relation to the axis of rotation, wherein the extension arm has an inner end facing the base and an opposite outer end, said at least one cutting insert being mounted to the extension arm at the outer end thereof. The radial distance between said extension plane and a radially outermost part of the base is suitably 5-40 mm, preferably 7-30 mm, and more preferably 9-22 mm. The cutting insert is preferably releasably mounted to an insert seat provided at the outer end of the associated extension arm. Hereby, a cutting insert may easily be replaced by a new one when any of the cutting edges on the cutting insert has been worn out.

The cutting part may comprise two or more such extension arms evenly or at least substantially evenly distributed about the central axis of the base, wherein the number of cutting inserts of the milling tool corresponds to the number of extension arms, each cutting insert being mounted to a respective one of the extension arms at the outer end thereof. Hereby, flank edges on two or more teeth on a workpiece may be machined during each revolution of the milling tool.

Further advantageous features of the milling tool according to the present invention will appear from the description following below.

According to a second aspect of the invention, said object is achieved by means of a method having the features defined in claim 19.

The method according to the second aspect of the invention is a method for chamfering flank edges of internal or external teeth on a cylindrical toothed workpiece at at least one of two opposite end faces of the workpiece, wherein each one of said teeth has a tooth tip, a tooth root, a first tooth flank surface extending between the tooth tip and the tooth root on a first side of the tooth and a second tooth flank surface extending between the tooth tip and the tooth root on an opposite second side of the tooth, a first flank edge being formed at an intersection between the first tooth flank surface and a first one of the two end faces of the workpiece and a second flank edge being formed at an intersection between the second tooth flank surface and said first one of the two end faces of the workpiece, wherein the workpiece is rotatable by a machine about a central axis of the workpiece and wherein the chamfering is performed by means of a milling tool according to the invention, which is rotatable by the machine about the axis of rotation of the tool body, the method comprising the following steps:
a) positioning the milling tool in a first predefined position in relation to the workpiece with the axis of rotation of the tool body in parallel with the central axis of the workpiece and with the cutting part of the tool body adjacent to said first one of the two end faces of the workpiece and with the first and second cutting edges facing this end face;
b) rotating the workpiece about its central axis in a direction of rotation with the second tooth flank surfaces as leading tooth flank surfaces and the first tooth flank surfaces as trailing tooth flank surfaces and simultaneously rotating the milling tool about the axis of rotation of the tool body, with a predefined relationship between the speed of rotation of the milling tool and the speed of rotation of the workpiece, in the same direction of rotation as the workpiece when said teeth are internal teeth on the workpiece or in an opposite direction of rotation when said teeth are external teeth on the workpiece, while keeping the axis of rotation of the tool body in parallel with the central axis of the workpiece and with the first cutting edge as leading cutting edge and the second cutting edge as trailing cutting edge such that the first cutting edge chamfers at least a part of the first flank edge of said teeth from the tooth tip towards the tooth root of each tooth;
c) positioning the milling tool in a second predefined position in relation to the workpiece with the axis of rotation of the tool body in parallel with the central axis of the workpiece and with the cutting part of the tool body adjacent to said first one of the two end faces of the workpiece and with the first and second cutting edges facing this end face; and
d) rotating the workpiece about its central axis in a direction of rotation with the first tooth flank surfaces as leading tooth flank surfaces and the second tooth flank surfaces as trailing tooth flank surfaces and simultaneously rotating the milling tool about the axis of rotation of the tool body, with a predefined relationship between the speed of rotation of the milling tool and the speed of rotation of the workpiece, in the same direction of rotation as the workpiece when said teeth are internal teeth on the workpiece or in an opposite direction of rotation when said teeth are external teeth on the workpiece, while keeping the axis of rotation of the tool body in parallel with the central axis of the workpiece and with the second cutting edge as leading cutting edge and the first cutting edge as trailing cutting edge such that the second cutting edge chamfers at least a part of the second flank edge of said teeth from the tooth tip towards the tooth root of each tooth.

Thus, each one of the first and second flank edges at the above-mentioned first end face of the workpiece is chamfered along at least a part of its extension in a machining direction from the tooth tip towards the tooth root of the associated tooth, wherein the cutting forces on the milling tool during the chamfering operations will be directed substantially towards the axis of rotation of the tool body. During the chamfering in step b and during the chamfering in step d, the axis of rotation of the tool body may remain in a fixed position in relation to the central axis of the workpiece, as seen in a plane perpendicular to the central axis of the workpiece.

In this description and the subsequent claims, the expression "leading tooth flank surfaces" refers to the tooth flank surfaces that are facing in the direction of rotation, i.e. forwards, when the toothed workpiece is rotated about its central axis, whereas the expression "trailing tooth flank surfaces" refers to the tooth flank surfaces that are facing in the opposite direction, i.e. backwards, when the toothed workpiece is rotated about its central axis. In a corresponding manner, the expression "leading cutting edge" refers to a cutting edge that is facing in the direction of rotation, i.e. forwards, when the milling tool is rotated about the axis of rotation of the tool body, whereas the expression "trailing cutting edge" refers to a cutting edge that is facing in the opposite direction, i.e. backwards, when the milling tool is rotated about the axis of rotation of the tool body.

According to an embodiment of the invention, the milling tool is moved in relation to the workpiece in axial direction in steps b and d to thereby gradually move the first cutting edge in a direction towards said first one of the two end faces of the workpiece during the chamfering of the first flank edges of said teeth in step b and gradually move the second cutting edge in a direction towards this end face of the workpiece during the chamfering of the second flank edges of said teeth in step d.

Further advantageous features of the method according to the present invention will appear from the dependent claims and the description following below.

According to a third aspect, the invention relates to a computer based program having instructions which when executed by a CNC machine causes the CNC machine to perform the steps according to any of the methods described above. Said computer program, or computer program product, may be included in a CAM software product, i.e. a software for computer-aided manufacturing. Said computer program may be in the form of a computer readable medium such as a USB stick, a CD-ROM or a data stream.

### BRIEF DESCRIPTION OF THE DRAWINGS

With reference to the appended drawings, a specific description of embodiments of the invention cited as examples follows below. In the drawings:
Fig 1a is a perspective view of a milling tool according to a first embodiment of the present invention,
Fig 1b is a lateral view of the milling tool of Fig 1a,
Fig 1c is a front view of the milling tool of Fig 1a,
Fig 1d is a lateral view from another direction of the milling tool of Fig 1a,
Fig 1e is a lateral view in larger scale of a cutting part included in the milling tool of Fig 1a, as seen from the same direction as in Fig 1d,
Fig 1f is an exploded perspective view of the milling tool of Fig 1a,
Figs 2a and 2b are perspective views from different directions of a cutting insert included in the milling tool of Fig 1a,
Fig 2c is a lateral view of the cutting insert of Figs 2a and 2b,
Figs 3a and 3b are perspective views from different directions of the milling tool of Fig 1a and an internally toothed workpiece, as seen with the milling tool in a position for chamfering flank edges at a first end face of the workpiece,
Fig 3c is a front view of the milling tool and workpiece of Figs 3a and 3b,
Fig 4a is a perspective view of the milling tool and workpiece of Figs 3a-3c, as seen with the milling tool in a position for chamfering flank edges at an opposite second end face of the workpiece,
Fig 4b is a front view of the milling tool and workpiece of Fig 4a,
Fig 5 is a perspective view in larger scale of a part of the internally toothed workpiece of Fig 3a,
Fig 6a is an end view in larger scale of a part of the internally toothed workpiece of Fig 3a, as seen after a chamfering of the flank edges at the first end face of the workpiece,
Fig 6b is another end view in larger scale of a part of the internally toothed workpiece of Fig 3a, as seen after a chamfering of the flank edges at the second end face of the workpiece,
Figs 7a-7h are schematic illustrations of different stages in a process of chamfering flank edges on an internally toothed workpiece by means of the milling tool of Fig 1a,
Fig 8a is a perspective view of a milling tool according to a second embodiment of the invention,
Fig 8b is a lateral view of the milling tool of Fig 8a,
Figs 8c and 8d are exploded perspective views from different directions of the milling tool of Fig 8a,
Fig 9a is a perspective view of a milling tool according to a third embodiment of the invention,
Fig 9b is a front view of the milling tool of Fig 9a,
Fig 9c is a lateral view of the milling tool of Fig 9a,
Fig 9d is a lateral view from another direction of the milling tool of Fig 9a,
Figs 9e and 9f are exploded perspective views from different directions of a part of the milling tool of Fig 9a,
Fig 10a is a front view of a cutting insert included in the milling tool of Fig 9a,
Fig 10b is a rear view of a cutting of Fig 10a,
Fig 10c is a lateral view of the cutting insert of Fig 10a,
Fig 10d is a planar view of the cutting insert of Fig 10a, and
Fig 11 is a perspective view of a milling tool according to a fourth embodiment of the invention.

### DETAILED DESCRIPTION OF EMBODIMENTS OF THE INVENTION

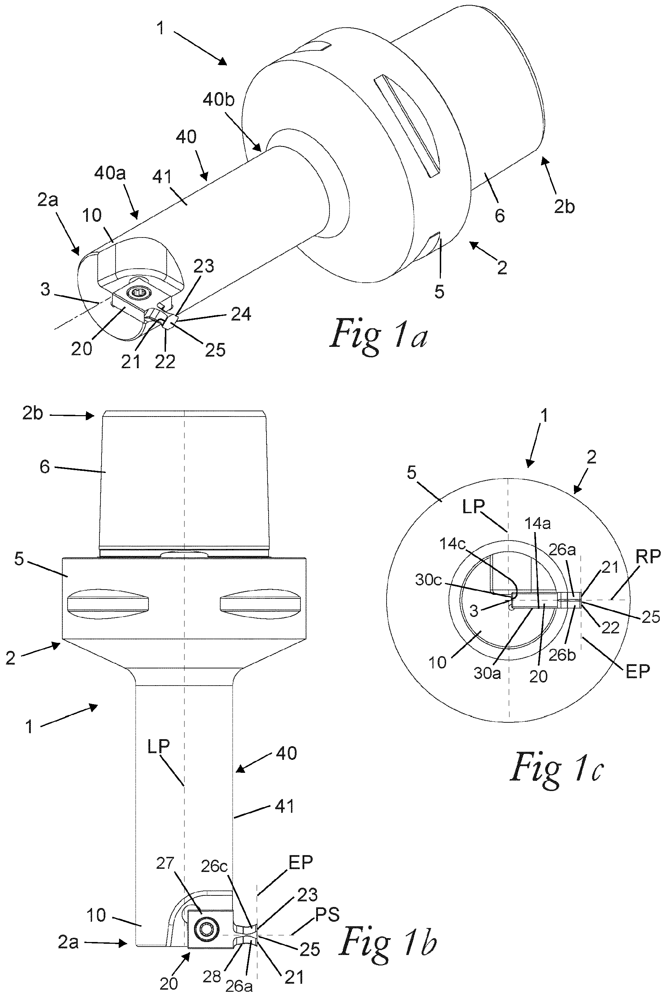

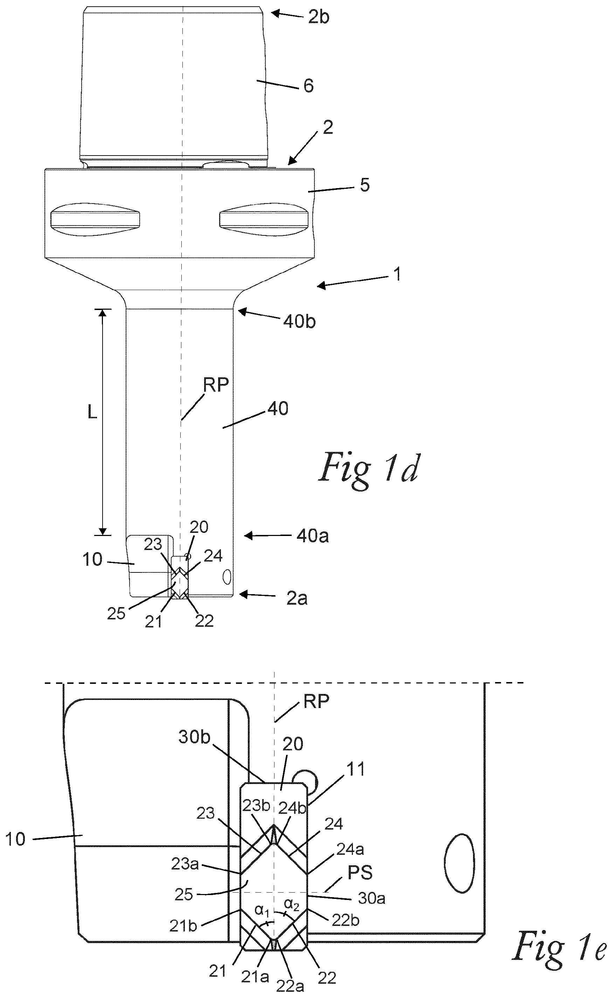

Different embodiments of a milling tool 1 according to the present invention are illustrated in Figs 1a-1f, Figs 8a-8d, Figs 9a-9f and Fig 11. The milling tool 1 is intended to be used for chamfering flank edges of internal or external teeth on a cylindrical toothed workpiece at opposite end faces of the workpiece. The milling tool 1 comprises a tool body 2, which is configured to be rotated about an axis of rotation 3. The tool body 2 has a front end 2a and an opposite rear end 2b. In the illustrated embodiments, a collar 5 is provided on the tool body 2. A rear part 6 of the tool body 2 located between the collar 5 and the rear end 2b forms a connection member, through which the tool body 2 is mountable, directly or via an intermediate tool holder, to a rotating spindle or the similar of a machine, for instance a milling machine.

The tool body 2 comprises a cutting part 10, which is located in front of the rear part 6 as seen in the axial direction of the tool body and at a distance from the rear part 6. A cutting insert 20, 20' provided with cutting edges 21, 22, 23, 24 is mounted to the cutting part 10.

The cutting insert 20, 20' is provided with a first cutting edge 21 and a second cutting edge 22 extending in a common extension plane EP, which is parallel to a longitudinal plane LP through the tool body 2 containing the axis of rotation 3. The first cutting edge 21 and the second cutting edge 22 are located opposite each other on opposite sides of a radial plane RP that contains the axis of rotation 3 and is perpendicular to said longitudinal plane LP and consequently also perpendicular to said extension plane EP. Each one of the first and second cutting edges 21, 22 has a front end 21a, 22a and an opposite rear end 21b, 22b. The rear end 21b of the first cutting edge 21 is located closer to the rear part 6 of the tool body than the front end 21a of the first cutting edge, and the rear end 22b of the second cutting edge 22 is located closer to the rear part 6 of the tool body than the front end 22a of the second cutting edge. The front end 21a of the first cutting edge 21 is located closer to said radial plane RP than the rear end 21b of the first cutting edge 21, wherein the distance between the first cutting edge 21 and said radial plane RP is gradually increasing as seen in a direction along the first cutting edge 21 from the front end 21a thereof to the rear end 21b thereof. The front end 22a of the second cutting edge 22 is located closer to said radial plane RP than the rear end 22b of the second cutting edge 22, wherein the distance between the second cutting edge 22 and said radial plane RP is gradually increasing as seen in a direction along the second cutting edge 22 from the front end 22a thereof to the rear end 22b thereof.

In the illustrated embodiments, the first cutting edge 21 is substantially rectilinear and extends at an angle α₁ to said radial plane RP and the second cutting edge 22 is substantially rectilinear and extends at an angle α₂ to said radial plane RP. The first and second angles α₁, α₂ may differ from each other but are preferably equal or at least substantially equal. The first angle α₁ and the second angle α₂ are larger than or equal to 15° and smaller than 85°, preferably 20-80°. In the illustrated embodiments, the first angle α₁ and the second angle α₂ are both approximately 45°.

In the illustrated embodiments, the cutting insert 20, 20' is also provided with a third cutting edge 23 and a fourth cutting edge 24 extending in the same extension plane EP as the first and second cutting edges 21, 22. The third cutting edge 23 and the fourth cutting edge 24 are located opposite each other on opposite sides of said radial plane RP. Each one of the third and fourth cutting edges 23, 24 has a front end 23a, 24a and an opposite rear end 23b, 24b. The rear end 23b of the third cutting edge 23 is located closer to the rear part 6 of the tool body than the front end 23a of the third cutting edge 23, and the rear end 24a of the fourth cutting edge 24 is located closer to the rear part 6 of the tool body than the front end 24a of the fourth cutting edge 24. The rear end 23b of the third cutting edge 23 is located closer to said radial plane RP than the front end 23a of the third cutting edge 23, wherein the distance between the third cutting edge 23 and said radial plane RP is gradually increasing as seen in a direction along the third cutting edge 23 from the rear end 23b thereof to the front end 23a thereof. The rear end 24b of the fourth cutting edge 24 is located closer to said radial plane RP than the front end 24a of the fourth cutting edge 24, wherein the distance between the fourth cutting edge 24 and said radial plane RP is gradually increasing as seen in a direction along the fourth cutting edge 24 from the rear end 24b thereof to the front end 24a thereof.

The cutting insert 20, 20' has a rake face 25 with one or more rake surfaces for the cutting edges 21-24 of the cutting insert. This rake face 25 faces radially outward away from the axis of rotation 3. In the illustrated embodiments, the rake face 25 is planar and extends in the same, or at least substantially the same, extension plane EP as the cutting edges 21-24.

The cutting insert 20, 20' is also provided with clearance faces 26a, 26b, 26c, 26d associated with the cutting edges 21-24, wherein the first cutting edge 21 is formed at an intersection between the rake face 25 and a first clearance face 26a, the second cutting edge 22 is formed at an intersection between the rake face 25 and a second clearance face 26b, the third cutting edge 23 is formed at an intersection between the rake face 25 and a third clearance face 26c and the fourth cutting edge 24 is formed at an intersection between the rake face 25 and a fourth clearance face 26d.

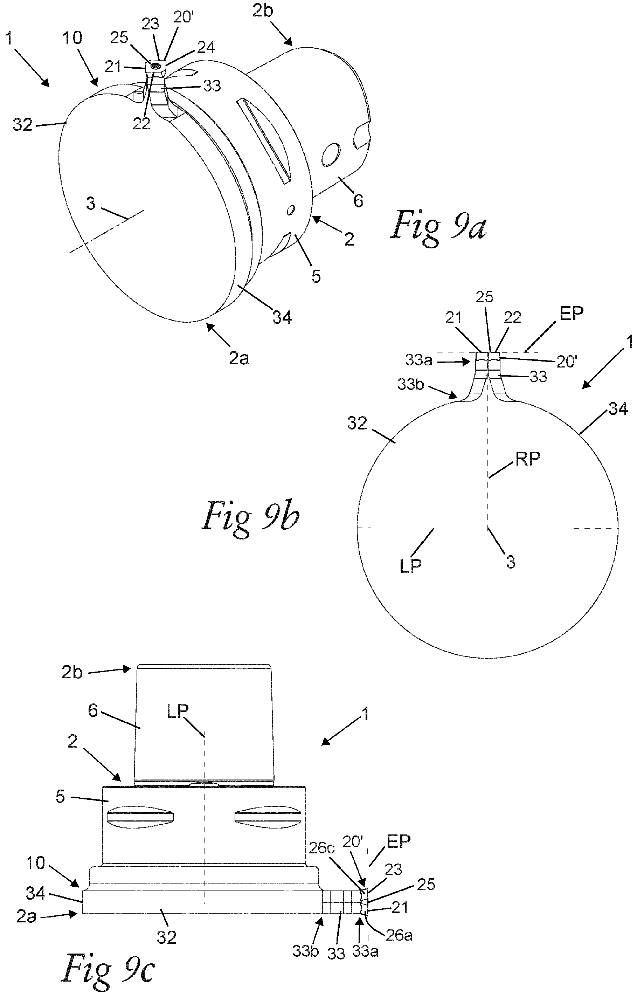

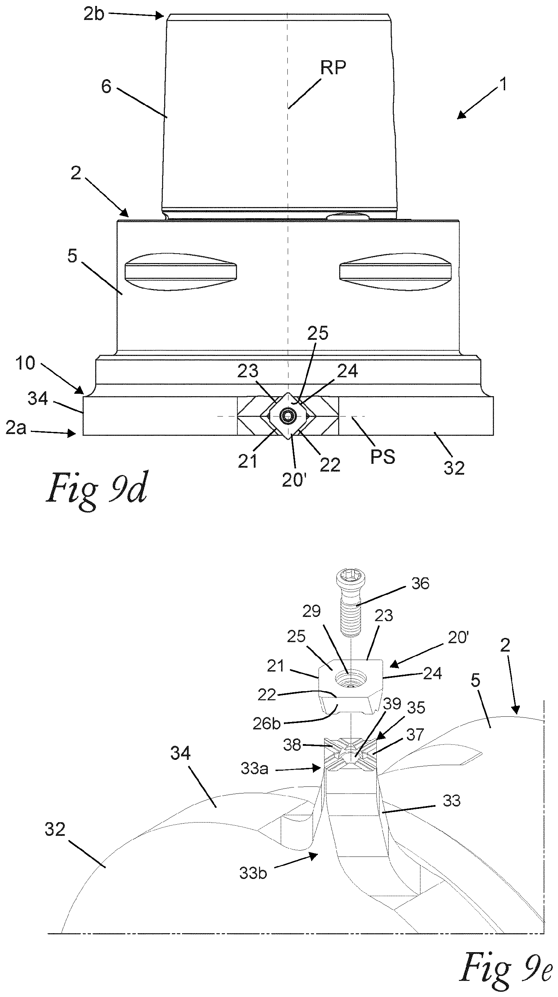

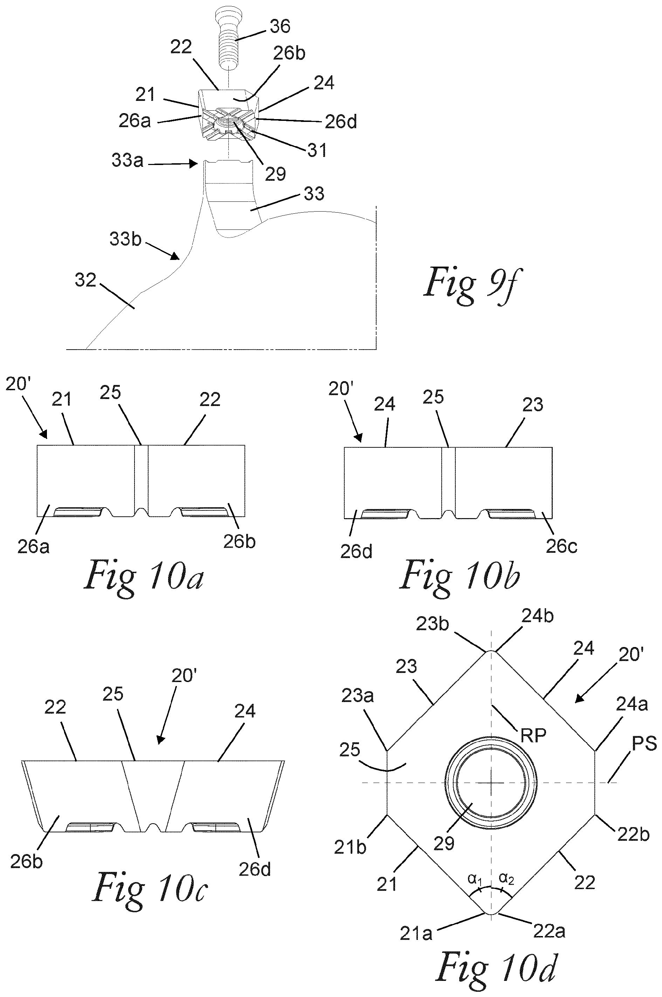

In the illustrated embodiments, the first cutting edge 21 and the second cutting edge 22 are mirror symmetrical to each other with respect to said radial plane RP, and also the third cutting edge 23 and the fourth cutting edge 24 are mirror symmetrical to each other with respect to this radial plane RP. Furthermore, the first cutting edge 21 and the third cutting edge 23 are here mirror symmetrical to each other with respect to a plane of symmetry PS (see Figs 1e and 9d) that extends halfway between the first and third cutting edges 21, 23 perpendicularly to said radial plane RP and perpendicularly to said extension plane ES, wherein also the second cutting edge 22 and the fourth cutting edge 24 are mirror symmetrical to each other with respect to this plane of symmetry PS.

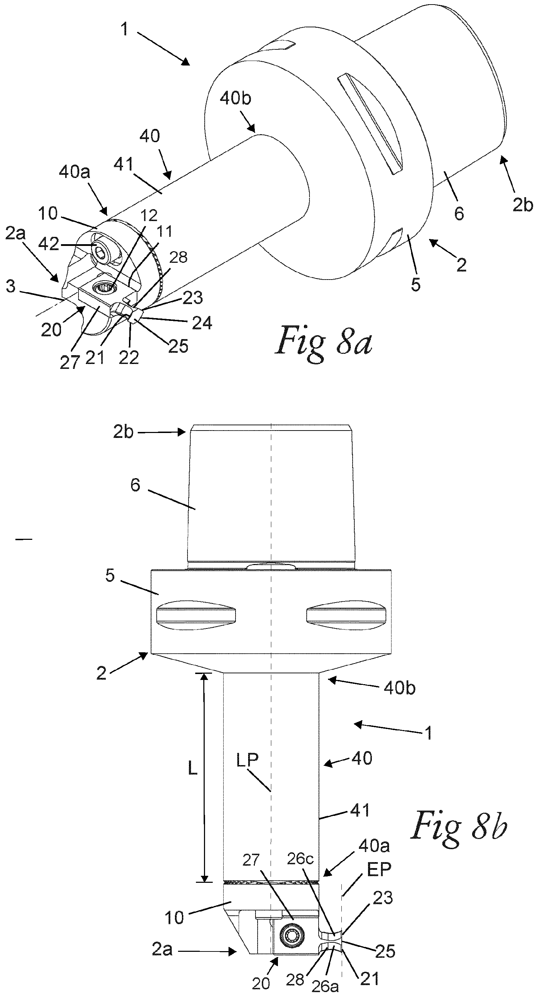

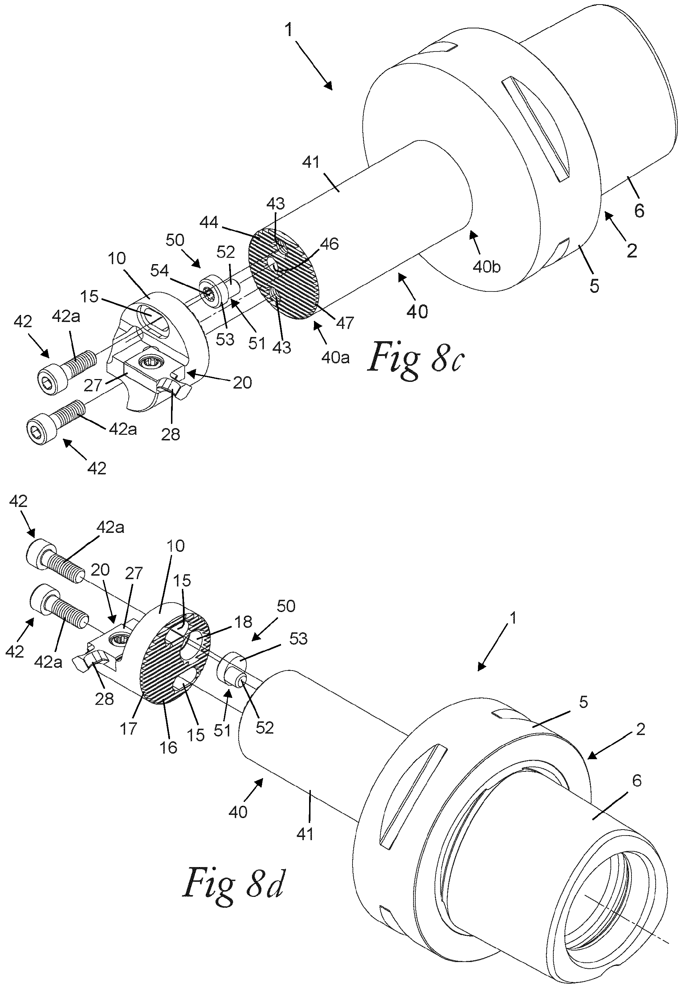

In the embodiments illustrated in Figs 1a-1f and in Figs 8a-8d, the cutting insert 20 comprises a base part 27 and an extension arm 28 fixed to and projecting from the base part 27. The extension arm 28 has an inner end 28a facing the base part 27 and an opposite outer end 28b, wherein the cutting edges 21-24 and said rake face 25 are arranged on the extension arm 28 at the outer end 28b thereof. In this case, the clearance faces 26a-26d are arranged on the extension arm 28 and provided on a peripheral surface 26 that extends around the extension arm 28 between the inner end 28a and the outer end 28b thereof. The extension arm 28 suitably has a length of 1-20 mm, preferably 1-15 mm, and more preferably 3-9 mm.

The base part 27 is configured to be received in an insert seat 11 in the cutting part 10 and the extension arm 28 is configured to project from the cutting part 10 in radial direction in relation to the axis of rotation 3 when the cutting insert 20 is mounted to the cutting part 10. The inner end 28a of the extension arm 28 is preferably located at a longer distance from the axis of rotation 3 than a radially outermost surface on the cutting part 10 when the cutting insert 20 is mounted to the cutting part 10.

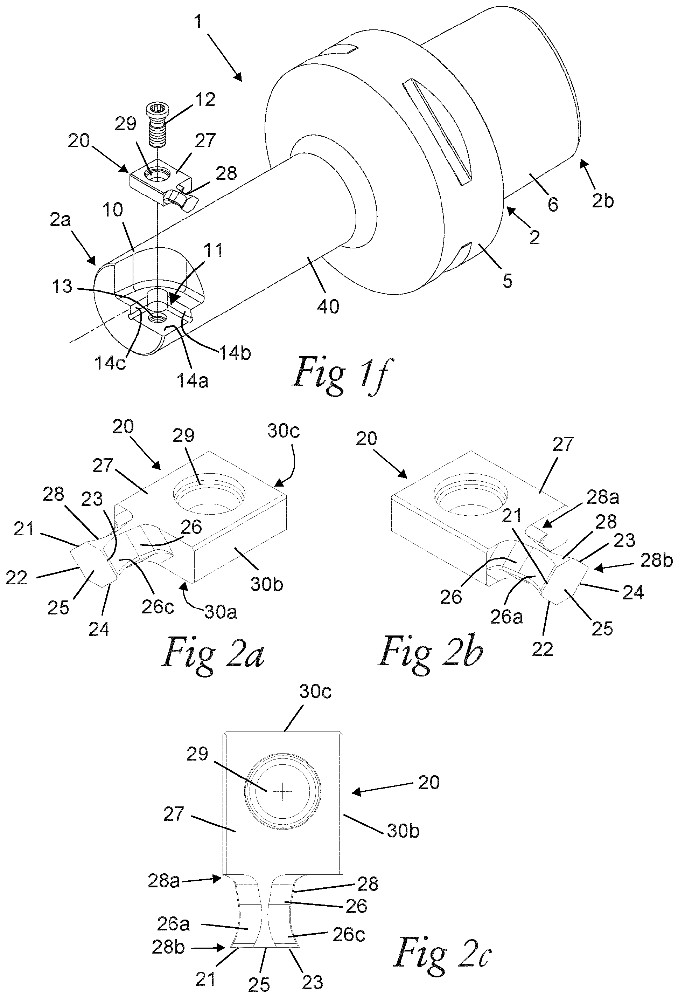

The illustrated cutting insert 20 is releasably fixed to the insert seat 11 by means of a fastening element 12 in the form of a screw, which extends through a through hole 29 in the cutting insert 20 and is engaged in a threaded hole 13 (see Fig 1f) in a tangential support surface 14a in the insert seat 11. The insert seat 11 is also provided with an axial support surface 14b and a radial support surface 14c for supporting the cutting insert 20 when mounted in the insert seat 11. An axial abutment surface 30b is provided on the base part 27 of the cutting insert 20 and is configured to abut against the axial support surface 14b in the insert seat 11. The base part 27 is also provided with a radial abutment surface 30c, which is configured to abut against the radial support surface 14c in the insert seat 11, and a tangential abutment surface 30a, which is configured to abut against the tangential support surface 14a in the insert seat 11.

In the embodiments illustrated in Figs 1a-1f and in Figs 8a-8d, the tool body 2 comprises an elongated shank part 40, which carries the cutting part 10 and extends from the cutting part towards the rear part 6. The shank part 40 has a front end 40a facing the cutting part 10 and an opposite rear end 40b facing the collar 5 and the rear part 6. The cutting part 10 is fixed to the shank part 40 at the front end 40a thereof. The shank part 40 has a peripheral surface 41, which extends around the shank part 40 between the rear end 40b and the front end 40a thereof. The shank part 40 has a longitudinal central axis that coincides with an axis of rotation 3 of the tool body 2. The inner end 28a of the extension arm 28 is located at a longer distance from the axis of rotation 3 than a radially outermost part of the peripheral surface 41 of the shank part 40 when the cutting insert 20 is mounted in the insert seat 11 of the cutting part 10.

In the illustrated embodiments, the shank part 40 is rod-shaped and has the form of a right circular cylinder. However, the shank part 40 may also have any other suitable shape. The shank part 40 may have a length L of 50-200 mm, preferably 100-150 mm.

In the embodiment illustrated in Figs 1a-1f, the cutting part 10 and the shank part 40 are formed in one piece.

In the embodiment illustrated in Figs 8a-8d, the cutting part 10 is detachably mounted to the shank part 40 at the front end 40a thereof by means of fastening elements 42 in the form of two screws, which extend through a respective through hole 15 in the cutting part 10 and are engaged in a respective threaded hole 43 provided in a front end face 44 of the shank part 40.

In the embodiment illustrated in Figs 8a-8d, the cutting part 10 is slidably mounted to the shank part 40 at the front end 40a thereof so as to be linearly slidable in relation to the shank part 40 perpendicularly to the axis of rotation 3 and in the longitudinal direction of the extension arm 28, wherein the cutting part 10 is lockable to the shank part 40 in different sliding positions in relation to the shank part 40 to thereby allow an adjustment of the radial distance between the above-mentioned extension plane EP and the axis of rotation 3. In the illustrated example, a rear face 16 of the cutting part 10 is provided with mutually parallel splines 17, which extend in parallel with a longitudinal axis of the extension arm 28 and which are in slidable engagement with corresponding splines 47 provided on the front end face 44 of the shank part 40 in order to allow the cutting part 10 to slide in the desired direction in relation to the shank part 40 during the adjustment of the sliding position of the cutting part 10 in relation to the shank part 40.

The milling tool 1 illustrated in Figs 8a-8d comprises an adjustment mechanism 50, by means of which the sliding position of the cutting part 10 in relation to the shank part 40 is adjustable. Thus, the exact positioning of the cutting part 10 along the splines 47 on the front end face 44 of the shank part 40 is adjustable by means of the adjustment mechanism 50. In the illustrated embodiment, the adjustment mechanism 50 comprises an adjustment element 51, which is configured to act between the cutting part 10 and the shank part 40. This adjustment element 51 comprises a pin 52, which is rotatably received in a hole 46 provided in the front end face 44 of the shank part 40, and a head 53, which is fixed to the pin 52 and rotatably received in a recess 18 provided in the rear face 16 of the cutting part 10. The axis of rotation of the pin 52 is parallel to but offset from the axis of rotation of the head 53 such that a rotation of the head 53 in the recess 18 will effect a sliding movement of the cutting part 10 in the longitudinal direction of the splines 17, 47. A socket 54 designed for releasable engagement with a torque tool (not shown) is provided in a front face of the head 53 so as to allow a torque tool to be connected to the head 53 when the head 53 is to be rotated in order to make it move the cutting part 10 in the longitudinal direction of the splines 17, 47. The socket 54 is accessible through a hole in the cutting part 10. Each one of the through holes 15 has an elongated cross-sectional shape with a longer axis extending substantially in the longitudinal direction of the splines 17 to thereby allow the cutting part 10 to move perpendicularly to the shafts 42a of the fastening elements 42 in the longitudinal direction of the splines 47 on the front end face 44 of the shank part 40. The cutting part 10 is lockable to the shank part 40 in a desired sliding position in relation to the shank part 40 by tightening of the fastening elements 42. The adjustment mechanism 50 may of course also be designed in any other suitable manner.

In the embodiment illustrated in Figs 9a-9f, the cutting part 10 comprises a disc-shaped or cylindrical base 32 with a central axis that coincides with the axis of rotation 3. In this case, the cutting part 10 also comprises an extension arm 33, which is fixed to the base 32 and projects from a peripheral surface 34 of the base 32 in radial direction in relation to the axis of rotation 3. The extension arm 33 has an inner end 33a facing the base 32 and an opposite outer end 33b. The extension arm 33 is fixed to the base 32 at its inner end 33a and the cutting insert 20' is mounted to the extension arm 33 at the outer end 33b thereof. The extension arm 33 has such a length that the radial distance between the above-mentioned extension plane EP and a radially outermost part of the base 32, i.e. the peripheral surface 34, is 5-40 mm, preferably 7-30 mm, and more preferably 9-22 mm.

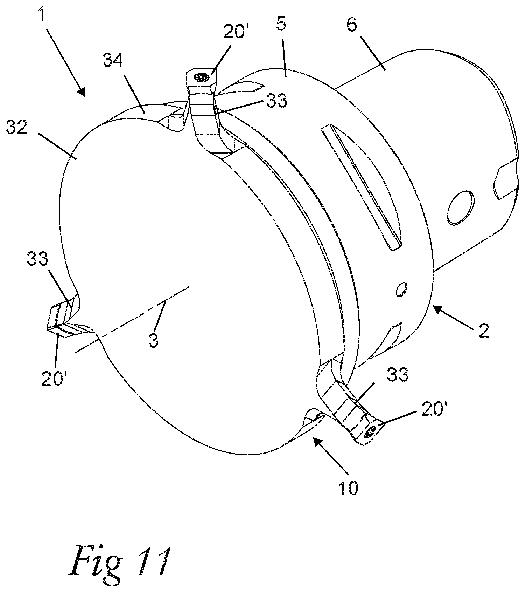

The cutting part 10 may comprises two or more such extension arms 33 evenly or at least substantially evenly distributed about the central axis of the base 32 with an equal angular distance between every two consecutive extension arms 33, as illustrated in Fig 11 where the cutting part 10 is provided with three extension arms 33. In this case, the number of cutting inserts 20' of the milling tool 1 corresponds to the number of extension arms 33, wherein each cutting insert 20' is mounted to a respective one of the extension arms 33 at the outer end 33b thereof.

In the embodiment illustrated in Figs 9a-9f, the cutting insert 20' is releasably mounted to an insert seat 35 provided at the outer end 33b of the extension arm 33. The illustrated cutting insert 20' is releasably fixed to the insert seat 35 by means of a fastening element 36 in the form of a screw, which extends through a through hole 29 in the cutting insert 20' and is engaged in a threaded hole 39 in a support surface 37 in the insert seat 35. The support surface 37 is with advantage provided with splines 38 or the similar configured for positive mechanical engagement with corresponding splines 31 on an underside of the cutting insert 20' in order to ensure a correct positioning of the cutting insert 20' in the insert seat 35 and prevent the cutting insert 20' from moving in relation to the support surface 37 when properly mounted to the insert seat 35.

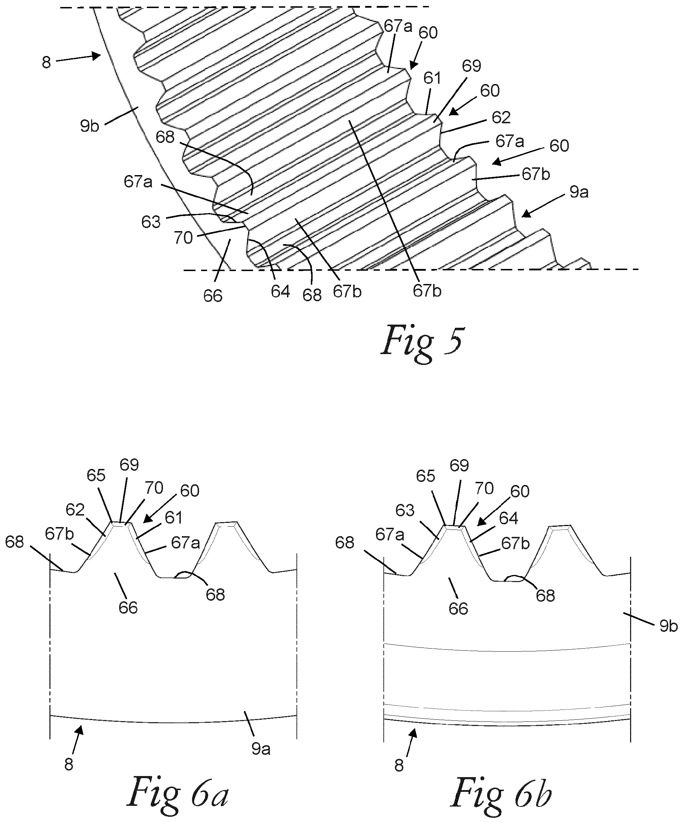

As mentioned above, the milling tool 1 is intended to be used for chamfering flank edges 61-64 (see Figs 5 and 6) of internal or external teeth 60 on a cylindrical toothed workpiece 8 at a first end face 9a of the workpiece and at an opposite second end face 9b of the workpiece. Each tooth 60 on the workpiece 8 has a tooth tip 65, a tooth root 66, a first tooth flank surface 67a extending between the tooth tip 65 and the tooth root 66 on a first side of the tooth and a second tooth flank surface 67b extending between the tooth tip 65 and the tooth root 66 on an opposite second side of the tooth. A first flank edge 61 is formed at an intersection between the first tooth flank surface 67a and the first end face 9a of the workpiece 8, a second flank edge 62 is formed at an intersection between the second tooth flank surface 67b and the first end face 9a of the workpiece 8, a third flank edge 63 is formed at an intersection between the first tooth flank surface 67a and the second end face 9b of the workpiece 8 and a fourth flank edge 64 is formed at an intersection between the second tooth flank surface 67b and the second end face 9b of the workpiece 8. A bottom land 68 is provided between the tooth roots 66 of every two adjacent teeth 60 and a top land 69 is provided at the tooth tip 65 of each tooth 60.

The edges 70 at the interfaces between the top land 69 of each tooth 60 on the workpiece 8 and the respective end face 9a, 9b of the workpiece are normally chamfered in a separate machining operation before the chamfering of the flank edges 61-64 is carried out by means of the milling tool 1.

During the performance of a chamfering operation with the use of the milling tool 1, the workpiece 8 is attached to a rotatable workpiece holder (not shown) of a machine and rotatable by the machine about a central axis 4 of the workpiece 8, wherein the milling tool 1 is attached to a rotatable tool holder (not shown) of the machine and rotatable by the machine about the axis of rotation 3 of the tool body 2 and moveable by the machine in relation to the workpiece 8 in the axial direction z of the workpiece 8 with the axis of rotation 3 of the tool body 2 in parallel with the central axis 4 of the workpiece 8. The speed of rotation of the workpiece 8, the speed of rotation of the milling tool 1 and the movements of the milling tool 1 in relation to the workpiece 8 are controlled in a program-controlled manner by means of an electronic control device (not shown).

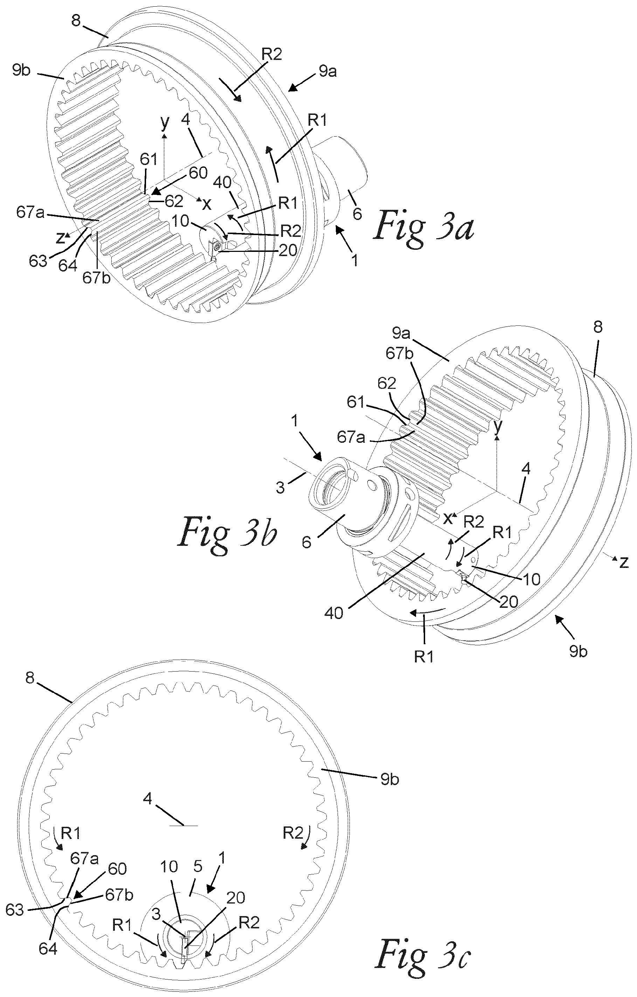

The workpiece holder and the tool holder of the machine are normally located opposite to each other with the tool holder facing the workpiece holder. In the examples illustrated in Figs 3-4, the end face of the workpiece 8 referred to as the first end face 9a is facing the tool holder of the machine, wherein the opposite second end face 9b of the workpiece 8 is facing the workpiece holder of the machine.

When mounted to the workpiece holder of the machine, the workpiece 8 is rotatable by the machine about its central axis 4 in a first direction of rotation R1 and in an opposite second direction of rotation R2. When the workpiece 8 is positioned with the second end face 9b of the workpiece 8 facing the workpiece holder (as illustrated in Figs 3-4), the workpiece 8 will be rotated with the second tooth flank surfaces 67b of the teeth 60 on the workpiece as leading tooth flank surfaces and with the first tooth flank surfaces 67a of the teeth 60 on the workpiece as trailing tooth flank surfaces when rotated in the first direction of rotation R1, and with the first tooth flank surfaces 67a of the teeth 60 on the workpiece as leading tooth flank surfaces and with the second tooth flank surfaces 67b of the teeth 60 on the workpiece as trailing tooth flank surfaces when rotated in the second direction of rotation R2.

In order to perform a chamfering of the first and second flank edges 61, 62 of the teeth 60 on the workpiece 8, the following steps are performed:
a) the milling tool 1 is positioned in a first predefined position in relation to the workpiece 8 with the axis of rotation 3 of the tool body 2 in parallel with the central axis 4 of the workpiece 8 and with the cutting part 10 of the tool body 2 adjacent to the first end face 9a of the workpiece 8 and with the first and second cutting edges 21, 22 facing this end face 9a, as illustrated in Figs 3a and 3b;
b) the workpiece 8 is rotated about its central axis 4 in a direction of rotation R1 with the second tooth flank surfaces 67b as leading tooth flank surfaces and with the first tooth flank surfaces 67a as trailing tooth flank surfaces and the milling tool 1 is simultaneously rotated about the axis of rotation 3 of the tool body 2, with a predefined relationship between the speed of rotation of the milling tool 1 and the speed of rotation of the workpiece 8, in the same direction of rotation R1 as the workpiece 8 when said teeth 60 are internal teeth on the workpiece 8 (see Figs 3a-3c) or in an opposite direction of rotation R2 when said teeth 60 are external teeth on the workpiece 8, while keeping the axis of rotation 3 of the tool body 2 in parallel with the central axis 4 of the workpiece 8 and with the first cutting edge 21 as leading cutting edge and the second cutting edge 22 as trailing cutting edge such that the first cutting edge 21 chamfers a part of the first flank edge 61 of said teeth 60 from the tooth tip 65 towards the tooth root 66 of each tooth 60;
c) the milling tool 1 is positioned in a second predefined position in relation to the workpiece 8 with the axis of rotation 3 of the tool body 2 in parallel with the central axis 4 of the workpiece 8 and with the cutting part 10 of the tool body 2 adjacent to the first end face 9a of the workpiece 8 and with the first and second cutting edges 21, 22 facing this end face 9a; and
d) the workpiece 8 is rotated about its central axis 4 in a direction of rotation R2 with the first tooth flank surfaces 67a as leading tooth flank surfaces and the second tooth flank surfaces 67b as trailing tooth flank surfaces and the milling tool 1 is simultaneously rotated about the axis of rotation 3 of the tool body 2, with a predefined relationship between the speed of rotation of the milling tool 1 and the speed of rotation of the workpiece 8, in the same direction of rotation R2 as the workpiece 8 when said teeth 60 are internal teeth on the workpiece 8 or in an opposite direction of rotation R1 when said teeth 60 are external teeth on the workpiece 8, while keeping the axis of rotation 3 of the tool body 2 in parallel with the central axis 4 of the workpiece 8 and with the second cutting edge 22 as leading cutting edge and the first cutting edge 21 as trailing cutting edge such that the second cutting edge 22 chamfers a part of the second flank edge 62 of said teeth 60 from the tooth tip 65 towards the tooth root 66 of each tooth 60.

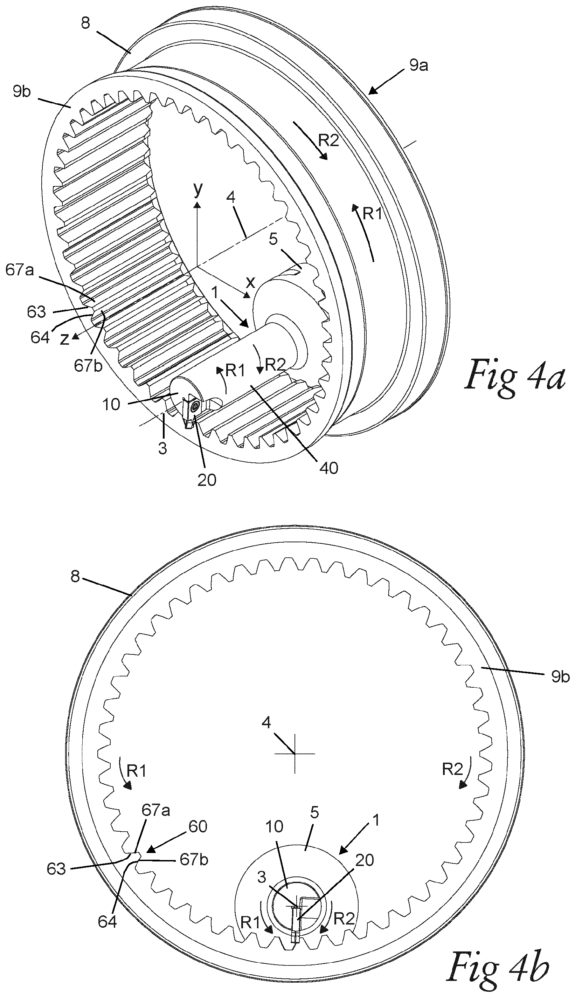

In order to perform a chamfering also of the third and fourth flank edges 63, 64 of the teeth 60 on the workpiece 8, the following additional steps are performed:
e) the milling tool 1 is positioned in a third predefined position in relation to the workpiece 8 with the axis of rotation 3 of the tool body 2 in parallel with the central axis 4 of the workpiece 8 and with the cutting part 10 of the tool body 2 adjacent to the second end face 9b of the workpiece 8 and with the third and fourth cutting edges 23, 24 facing this end face 9b, as illustrated in Figs 4a and 4b;
f) the workpiece 8 is rotated about its central axis 4 in a direction of rotation R1 with the second tooth flank surfaces 67b as leading tooth flank surfaces and with the first tooth flank surfaces 67a as trailing tooth flank surfaces and the milling tool 1 is simultaneously rotated about the axis of rotation 3 of the tool body 2, with a predefined relationship between the speed of rotation of the milling tool 1 and the speed of rotation of the workpiece 8, in the same direction of rotation R1 as the workpiece 8 when said teeth 60 are internal teeth on the workpiece 8 (see Figs 4a-4c) or in an opposite direction of rotation R2 when said teeth 60 are external teeth on the workpiece 8, while keeping the axis of rotation 3 of the tool body 2 in parallel with the central axis 4 of the workpiece 8 and with the third cutting edge 23 as leading cutting edge and the fourth cutting edge 24 as trailing cutting edge such that the third cutting edge 23 chamfers a part of the third flank edge 63 of said teeth 60 from the tooth tip 65 towards the tooth root 66 of each tooth 60;
g) the milling tool 1 is positioned in a fourth predefined position in relation to the workpiece 8 with the axis of rotation 3 of the tool body 2 in parallel with the central axis 4 of the workpiece 8 and with the cutting part 10 of the tool body 2 adjacent to the second end face 9b of the workpiece 8 and with the third and fourth cutting edges 23, 24 facing this end face 9b; and
h) the workpiece 8 is rotated about its central axis 4 in a direction of rotation R2 with the first tooth flank surfaces 67a as leading tooth flank surfaces and the second tooth flank surfaces 67b as trailing tooth flank surfaces and the milling tool 1 is simultaneously rotated about the axis of rotation 3 of the tool body 2, with a predefined relationship between the speed of rotation of the milling tool 1 and the speed of rotation of the workpiece 8, in the same direction of rotation R2 as the workpiece 8 when said teeth 60 are internal teeth on the workpiece 8 or in an opposite direction of rotation R1 when said teeth 60 are external teeth on the workpiece 8, while keeping the axis of rotation 3 of the tool body 2 in parallel with the central axis 4 of the workpiece 8 and with the fourth cutting edge 24 as leading cutting edge and the third cutting edge 23 as trailing cutting edge such that the fourth cutting edge 24 chamfers a part of the fourth flank edge 64 of said teeth 60 from the tooth tip 65 towards the tooth root 66 of each tooth 60.

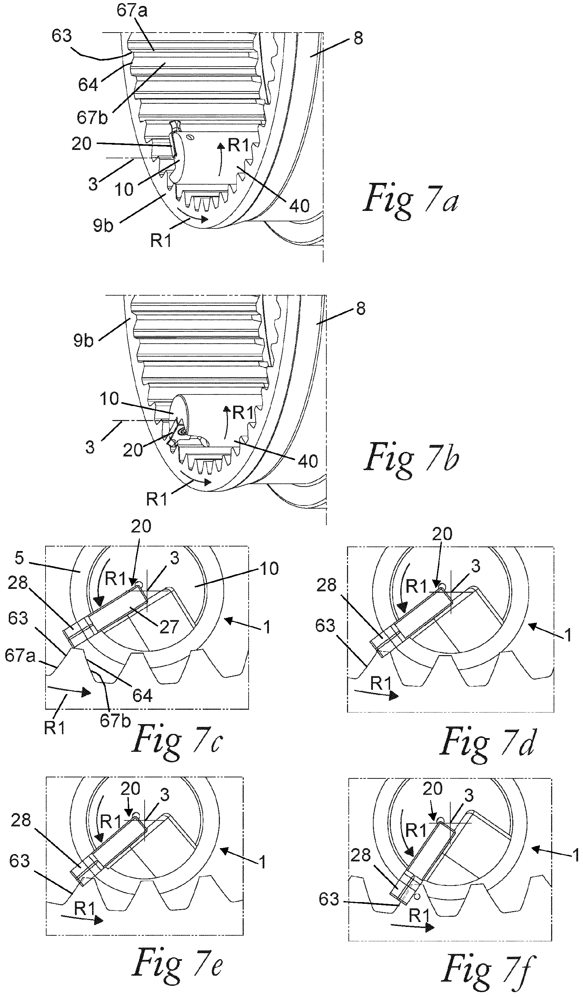

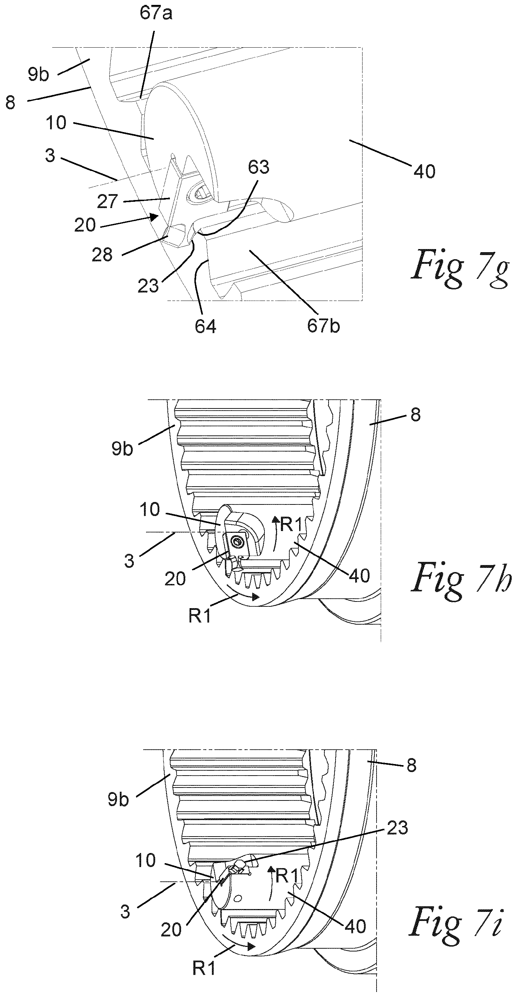

During the chamfering in each one of the above-mentioned steps b, d, f and h, a part of the active one of the cutting edges 21-24 is rotated into a gap between two adjacent teeth 60 and is thereafter moved together with this gap in the direction of rotation of the workpiece 8 during a part of a revolution of the workpiece 8, while coming into cutting engagement with a part of one of the flank edges that are located on opposite sides of the gap, before being rotated out of the gap, as illustrated in Figs 7a-7i. Upon continued rotation of the milling tool 1, a part of the active one of the cutting edges 21-24 is rotated into a new gap between two other adjacent teeth 60 on the workpiece 8, and so on. The position of the milling tool 1 in relation to the workpiece 8 and the rotation of the milling tool 1 in relation to the rotation of the workpiece 8 are to be so adapted that the active one of the cutting edges 21-24 in each one of steps b, d, f and h will make contact with each flank edge 61, 62, 63, 64 to be chamfered at the tooth tip 65 and thereafter will move, in cutting engagement, along a part of the flank edge 61, 62, 63, 64 in a direction towards the tooth root 66 while chamfering this part pf the flank edge, as illustrated in Figs 7c-7g.

The relationship between the speed of rotation of the milling tool 1 and the speed of rotation of the workpiece 8 is to be so adapted in each one of the above-mentioned steps b, d, f and h that a part of the active one of the cutting edges 21-24 has entered the gaps between all teeth 60 on the workpiece 8 after a certain number of revolutions of the workpiece 8. In order to allow the active cutting edge to move in the same direction as the gap between two adjacent teeth 60 on the workpiece 8 with a part of the cutting edge received in the gap in question, the milling tool 1 has to be rotated about the axis of rotation 3 of the tool body 2 in the same direction of rotation as the workpiece 8 when flank edges 61-64 of internal teeth 60 on a workpiece are being chamfered and in a direction of rotation that is opposite to the direction of rotation of the workpiece 8 when flank edges 61-64 of external teeth 60 on a workpiece are being chamfered.

During the chamfering in each one of the above-mentioned steps b, d, f and h, the axis of rotation 3 of the tool body 2 is maintained in a fixed position in relation to the central axis 4 of the workpiece 8, as seen in a plane x, y perpendicular to the central axis 4 of the workpiece 8. However, the milling tool 1 may be moved in relation to the workpiece 8 in the axial direction z of the workpiece in each one of steps b and d, to thereby gradually move the first cutting edge 21 in a direction towards the first end face 9a of the workpiece 8 during the chamfering of the first flank edges 61 in step b and gradually move the second cutting edge 22 in a direction towards the first end face 9a of the workpiece 8 during the chamfering of the second flank edges 62 in step d, wherein each one of the first flank edges 61 is chamfered by the first cutting edge 21 in several consecutive cuts in step b and each one of the second flank edges 62 is chamfered by the second cutting edge 22 in several consecutive cuts in step d. The milling tool 1 may also be moved in relation to the workpiece 8 in the axial direction z of the workpiece in each one of steps f and h, to thereby gradually move the third cutting edge 23 in a direction towards the second end face 9b of the workpiece 8 during the chamfering of the third flank edges 63 in step f and gradually move the fourth cutting edge 24 in a direction towards the second end face 9b of the workpiece 8 during the chamfering of the fourth flank edges 64 in step h, wherein each one of the third flank edges 63 is chamfered by the third cutting edge 23 in several consecutive cuts in step b and each one of the second flank edges 62 is chamfered by the second cutting edge 22 in several consecutive cuts in step d. As an alternative, the milling tool 1 may remain in a fixed position in relation to the workpiece 8, as seen in the axial direction z of the workpiece, during the chamfering in steps b, d, f and h, wherein each individual flank edge 61-64 is chamfered by the active one of the cutting edges 21-24 in one single cut.

During the chamfering in steps b, d, f and h, the axis of rotation 3 of the tool body 2 has to be in such a position in relation to the workpiece 8 that the rake face 25 is prevented from hitting the bottom lands 68 adjacent to the flank edges that are being chamfered. It is therefore not possible, with the milling tool 1 according to the present invention, to chamfer the flank edges 61-64 along the entire length thereof. On the contrary, the chamfering of an individual flank edge 61-64 has to be ended at a distance from the adjacent bottom land 68, as illustrated in Figs 6a and 6b.

The invention is of course not in any way restricted to the embodiments described above. On the contrary, many possibilities to modifications thereof will be apparent to a person with ordinary skill in the art without departing from the basic idea of the invention such as defined in the appended claims.

## Claims

1. A milling tool for chamfering flank edges (61-64) of internal or external teeth (60) on a cylindrical toothed workpiece (8) at at least one of two opposite end faces (9a, 9b) of the workpiece (8), the milling tool (1) comprising:
- a tool body (2), which at a rear end (2b) has a rear part (6) configured for attachment to a machine in order to allow the tool body (2) to be rotated by the machine about an axis of rotation (3) of the tool body (2), wherein the tool body (2) comprises a cutting part (10) located in front of the rear part (6) as seen in an axial direction of the tool body (2); and
- at least one cutting insert (20, 20') mounted to the cutting part (10),
**characterized in:**
- **that** said at least one cutting insert (20, 20') is provided with at least a first cutting edge (21) and a second cutting edge (22) extending in a common extension plane (EP), which is parallel to a longitudinal plane (LP) that contains the axis of rotation (3), wherein the first cutting edge (21) and the second cutting edge (22) are located opposite each other on opposite sides of a radial plane (RP) that contains the axis of rotation (3) and is perpendicular to said longitudinal plane (LP), and wherein:
• the first cutting edge (21) has a rear end (21b) and an opposite front end (21a), the rear end (21b) of the first cutting edge (21) being located closer to the rear part (6) of the tool body than the front end (21a) of the first cutting edge (21), wherein the front end (21a) of the first cutting edge (21) is located closer to said radial plane (RP) than the rear end (21b) of the first cutting edge (21) and the distance between the first cutting edge (21) and said radial plane (RP) is gradually increasing as seen in a direction along the first cutting edge (21) from the front end (21a) thereof to the rear end (21b) thereof, and
• the second cutting edge (22) has a rear end (22b) and an opposite front end (22a), the rear end (22b) of the second cutting edge (22) being located closer to the rear part (6) of the tool body than the front end (22a) of the second cutting edge (22), wherein the front end (22a) of the second cutting edge (22) is located closer to said radial plane (RP) than the rear end (22b) of the second cutting edge (22) and the distance between the second cutting edge (22) and said radial plane (RP) is gradually increasing as seen in a direction along the second cutting edge (22) from the front end (22a) thereof to the rear end (22b) thereof; and
- **that** said at least one cutting insert (20, 20') has a rake face (25) with one or more rake surfaces for the first and second cutting edges (21, 22), wherein this rake face (25) faces radially outward away from the axis of rotation (3).

2. A milling tool according to claim 1, **characterized in that** said rake face (25) is planar and extends in the same extension plane (EP) as the first and second cutting edges (21, 22).

3. A milling tool according to claim 1 or 2, **characterized in:**
- **that** the first cutting edge (21) is substantially rectilinear and extends at an angle (α₁) to said radial plane (RP) that is larger than or equal to 15° and smaller than 85°, preferably 20-80°; and
- **that** the second cutting edge (22) is substantially rectilinear and extends at an angle (α₂) to said radial plane (RP) that is larger than or equal to 15° and smaller than 85°, preferably 20-80°.

4. A milling tool according to any of claims 1-3, **characterized in that** the first cutting edge (21) and the second cutting edge (22) are mirror symmetrical to each other with respect to said radial plane (RP).

5. A milling tool according to any of claims 1-4, **characterized in:**
- **that** said at least one cutting insert (20, 20') is also provided with a third cutting edge (23) and a fourth cutting edge (24) extending in the same extension plane (EP) as the first and second cutting edges (21, 22), wherein the third cutting edge (23) and the fourth cutting edge (24) are located opposite each other on opposite sides of said radial plane (RP), and wherein:
• the third cutting edge (23) has a rear end (23b) and an opposite front end (23a), the rear end (23b) of the third cutting edge (23) being located closer to the rear part (6) of the tool body than the front end (23a) of the third cutting edge (23), wherein the rear end (23b) of the third cutting edge (23) is located closer to said radial plane (RP) than the front end (23a) of the third cutting edge (23) and the distance between the third cutting edge (23) and said radial plane (RP) is gradually increasing as seen in a direction along the third cutting edge (23) from the rear end (23b) thereof to the front end (23a) thereof, and
• the fourth cutting edge (24) has a rear end (24b) and an opposite front end (24a), the rear end (24b) of the fourth cutting edge (24) being located closer to the rear part (6) of the tool body than the front end (24a) of the fourth cutting edge (24), wherein the rear end (24b) of the fourth cutting edge (24) is located closer to said radial plane (RP) than the front end (24a) of the fourth cutting edge (24) and the distance between the fourth cutting edge (24) and said radial plane (RP) is gradually increasing as seen in a direction along the fourth cutting edge (24) from the rear end (24b) thereof to the front end (24a) thereof; and
- **that** said rake face (25) is provided with one or more rake surfaces also for the third and fourth cutting edges (23, 24).

6. A milling tool according to claim 5, **characterized in that** the third cutting edge (23) and the fourth cutting edge (24) are mirror symmetrical to each other with respect to said radial plane (RP).

7. A milling tool according to claim 5 or 6, **characterized in:**
- **that** the first cutting edge (21) and the third cutting edge (23) are mirror symmetrical to each other with respect to a plane of symmetry (PS) that extends halfway between the first and third cutting edges (21, 23) perpendicularly to said radial plane (RP) and perpendicularly to said extension plane (EP); and
- **that** also the second cutting edge (22) and the fourth cutting edge (24) are mirror symmetrical to each other with respect to said plane of symmetry (PS).

8. A milling tool according to any of claims 5-7, **characterized in that** said at least one cutting insert (20) comprises a base part (27) and an extension arm (28) fixed to and projecting from the base part (27), wherein the extension arm (28) has an inner end (28a) facing the base part (27) and an opposite outer end (28b), said cutting edges (21-24) and said rake face (25) being arranged on the extension arm (28) at the outer end (28b) thereof, and wherein the base part (27) is configured to be received in an insert seat (11) in the cutting part (10) and the extension arm (28) is configured to project from the cutting part (10) in radial direction in relation to the axis of rotation (3) when the cutting insert (20) is mounted to the cutting part (10).

9. A milling tool according to claim 8, **characterized in that** the extension arm (28) has a length of 1-20 mm, preferably 1-15 mm, more preferably 3-9 mm.

10. A milling tool according to claim 8 or 9, **characterized in:**
- **that** the tool body (2) comprises an elongated shank part (40), which carries the cutting part (10) and extends from the cutting part (10) towards the rear part (6) and which has a front end (40a) facing the cutting part (10), an opposite rear end (40b) and a peripheral surface (41) extending around the shank part (40) between the rear end (40b) and the front end (40a) thereof, wherein the shank part (40) has a longitudinal central axis that coincides with the axis of rotation (3) of the tool body (2); and
- **that** the inner end (28a) of the extension arm (28) is located at a longer distance from the axis of rotation (3) than a radially outermost part of the peripheral surface (41) of the shank part (40) when the cutting insert (20) is mounted to the cutting part (10).

11. A milling tool according to claim 10, **characterized in that** the cutting part (10) is slidably mounted to the shank part (40) at the front end (40a) thereof so as to be linearly slidable in relation to the shank part (40) perpendicularly to the axis of rotation (3) and in a longitudinal direction of the extension arm (28), wherein the cutting part (10) is lockable to the shank part (40) in different sliding positions in relation to the shank part (40) to thereby allow an adjustment of the radial distance between said extension plane (EP) and the axis of rotation (3).

12. A milling tool according to claim 10, **characterized in that** the cutting part (10) and the shank part (40) are formed in one piece.

13. A milling tool according to any of claims 10-12, **characterized in that** the shank part (40) is rod-shaped.

14. A milling tool according to any of claims 10-13, **characterized in that** the shank part (40) has a length (L) of 50-200 mm, preferably 100-150 mm.

15. A milling tool according to any of claims 5-7, **characterized in that** the cutting part (10) comprises a disc-shaped or cylindrical base (32) with a central axis that coincides with the axis of rotation (3) and at least one extension arm (33) fixed to the base (32) and projecting from the base (32) in radial direction in relation to the axis of rotation (3), wherein the extension arm (33) has an inner end (33a) facing the base (32) and an opposite outer end (33b), said at least one cutting insert (20') being mounted to the extension arm (33) at the outer end (33b) thereof.

16. A milling tool according to claim 15, **characterized in that** the radial distance between said extension plane (EP) and a radially outermost part of the base (32) is 5-40 mm, preferably 7-30 mm, more preferably 9-22 mm.

17. A milling tool according to claim 15 or 16, **characterized in that** said at least one cutting insert (20') is releasably mounted to an insert seat (35) provided at the outer end (33b) of the associated extension arm (33).

18. A milling tool according to any of claims 15-17, **characterized in that** the cutting part (10) comprises two or more such extension arms (33) evenly or at least substantially evenly distributed about the central axis of the base (32), wherein the number of cutting inserts (20') of the milling tool (1) corresponds to the number of extension arms (33), each cutting insert (20') being mounted to a respective one of the extension arms (33) at the outer end (33b) thereof.

19. A method for chamfering flank edges of internal or external teeth (60) on a cylindrical toothed workpiece (8) at at least one of two opposite end faces (9a, 9b) of the workpiece (8), wherein each one of said teeth (60) has a tooth tip (65), a tooth root (66), a first tooth flank surface (67a) extending between the tooth tip (65) and the tooth root (66) on a first side of the tooth and a second tooth flank surface (67b) extending between the tooth tip (65) and the tooth root (66) on an opposite second side of the tooth, a first flank edge (61) being formed at an intersection between the first tooth flank surface (67a) and a first one (9a) of the two end faces of the workpiece (8) and a second flank edge (62) being formed at an intersection between the second tooth flank surface (67b) and said first one (9a) of the two end faces of the workpiece (8), wherein the workpiece (8) is rotatable by a machine about a central axis (4) of the workpiece (8) and wherein the chamfering is performed by means of a milling tool (1) according to any of claims 1-18, which is rotatable by the machine about the axis of rotation (3) of the tool body (2), the method comprising the following steps:
a) positioning the milling tool (1) in a first predefined position in relation to the workpiece (8) with the axis of rotation (3) of the tool body (2) in parallel with the central axis (4) of the workpiece (8) and with the cutting part (10) of the tool body (2) adjacent to said first one (9a) of the two end faces of the workpiece (8) and with the first and second cutting edges (21, 22) facing this end face (9a);
b) rotating the workpiece (8) about its central axis (4) in a direction of rotation (R1) with the second tooth flank surfaces (67b) as leading tooth flank surfaces and the first tooth flank surfaces (67a) as trailing tooth flank surfaces and simultaneously rotating the milling tool (1) about the axis of rotation (3) of the tool body (2), with a predefined relationship between the speed of rotation of the milling tool (1) and the speed of rotation of the workpiece (8), in the same direction of rotation (R1) as the workpiece (8) when said teeth (60) are internal teeth on the workpiece (8) or in an opposite direction of rotation (R2) when said teeth (60) are external teeth on the workpiece (8), while keeping the axis of rotation (3) of the tool body (2) in parallel with the central axis (4) of the workpiece (8) and with the first cutting edge (21) as leading cutting edge and the second cutting edge (22) as trailing cutting edge such that the first cutting edge (21) chamfers at least a part of the first flank edge (61) of said teeth (60) from the tooth tip (65) towards the tooth root (66) of each tooth (60);
c) positioning the milling tool (1) in a second predefined position in relation to the workpiece (8) with the axis of rotation (3) of the tool body (2) in parallel with the central axis (4) of the workpiece (8) and with the cutting part (10) of the tool body (2) adjacent to said first one (9a) of the two end faces of the workpiece (8) and with the first and second cutting edges (21, 22) facing this end face (9a); and
d) rotating the workpiece (8) about its central axis (4) in a direction of rotation (R2) with the first tooth flank surfaces (67a) as leading tooth flank surfaces and the second tooth flank surfaces (67b) as trailing tooth flank surfaces and simultaneously rotating the milling tool (1) about the axis of rotation (3) of the tool body (2), with a predefined relationship between the speed of rotation of the milling tool (1) and the speed of rotation of the workpiece (8), in the same direction of rotation (R2) as the workpiece (8) when said teeth (60) are internal teeth on the workpiece (8) or in an opposite direction of rotation (R1) when said teeth (60) are external teeth on the workpiece (8), while keeping the axis of rotation (3) of the tool body (2) in parallel with the central axis (4) of the workpiece (8) and with the second cutting edge (22) as leading cutting edge and the first cutting edge (21) as trailing cutting edge such that the second cutting edge (22) chamfers at least a part of the second flank edge (62) of said teeth (60) from the tooth tip (65) towards the tooth root (66) of each tooth (60).

20. A method according to claim 19, wherein:
- the milling tool (1) is moved in relation to the workpiece (8) in axial direction (z) in step b to thereby gradually move the first cutting edge (21) in a direction towards said first one (9a) of the two end faces of the workpiece (8) during the chamfering of the first flank edges (61) of said teeth (60); and
- the milling tool (1) is moved in relation to the workpiece (8) in axial direction (z) in step d to thereby gradually move the second cutting edge (22) in a direction towards said first one (9a) of the two end faces of the workpiece (8) during the chamfering of the second flank edges (62) of said teeth (60).

21. A method according to claim 19 or 20, wherein a third flank edge (63) is formed at an intersection between the first tooth flank surface (67a) of each one of said teeth (60) and a second one (9b) of the two end faces of the workpiece (8) and a fourth flank edge (64) is formed at an intersection between the second tooth flank surface (67b) of each one of said teeth (60) and said second one (9b) of the two end faces of the workpiece (8), and wherein said milling tool (1) is a milling tool according to any of claims 5-18, the method comprising the following additional steps:
e) positioning the milling tool (1) in a third predefined position in relation to the workpiece (8) with the axis of rotation (3) of the tool body (2) in parallel with the central axis (4) of the workpiece (8) and with the cutting part (10) of the tool body (2) adjacent to said second one (9b) of the two end faces of the workpiece (8) and with the third and fourth cutting edges (23, 24) facing this end face (9b);
f) rotating the workpiece (8) about its central axis (4) in a direction of rotation (R1) with the second tooth flank surfaces (67b) as leading tooth flank surfaces and the first tooth flank surfaces (67a) as trailing tooth flank surfaces and simultaneously rotating the milling tool (1) about the axis of rotation (3) of the tool body (2), with a predefined relationship between the speed of rotation of the milling tool (1) and the speed of rotation of the workpiece (8), in the same direction of rotation (R1) as the workpiece (8) when said teeth (60) are internal teeth on the workpiece (8) or in an opposite direction of rotation (R2) when said teeth (60) are external teeth on the workpiece (8), while keeping the axis of rotation (3) of the tool body (2) in parallel with the central axis (4) of the workpiece (8) and with the third cutting edge (23) as leading cutting edge and the fourth cutting edge (24) as trailing cutting edge such that the third cutting edge (23) chamfers at least a part of the third flank edge (63) of said teeth (60) from the tooth tip (65) towards the tooth root (66) of each tooth (60);
g) positioning the milling tool (1) in a fourth predefined position in relation to the workpiece (8) with the axis of rotation (3) of the tool body (2) in parallel with the central axis (4) of the workpiece (8) and with the cutting part (10) of the tool body (2) adjacent to said second one (9b) of the two end faces of the workpiece (8) and with the third and fourth cutting edges (23, 24) facing this end face (9b); and
h) rotating the workpiece (8) about its central axis (4) in a direction of rotation (R2) with the first tooth flank surfaces (67a) as leading tooth flank surfaces and the second tooth flank surfaces (67b) as trailing tooth flank surfaces and simultaneously rotating the milling tool (1) about the axis of rotation (3) of the tool body (2), with a predefined relationship between the speed of rotation of the milling tool (1) and the speed of rotation of the workpiece (8), in the same direction of rotation (R2) as the workpiece (8) when said teeth (60) are internal teeth on the workpiece (8) or in an opposite direction of rotation (R1) when said teeth (60) are external teeth on the workpiece (8), while keeping the axis of rotation (3) of the tool body (2) in parallel with the central axis (4) of the workpiece (8) and with the fourth cutting edge (24) as leading cutting edge and the third cutting edge (23) as trailing cutting edge such that the fourth cutting edge (24) chamfers at least a part of the fourth flank edge (64) of said teeth (60) from the tooth tip (65) towards the tooth root (66) of each tooth (60).

22. A method according to claim 21, wherein:
- the milling tool (1) is moved in relation to the workpiece (8) in axial direction (z) in step f to thereby gradually move the third cutting edge (23) in a direction towards said second one (9b) of the two end faces of the workpiece (8) during the chamfering of the third flank edges (63) of said teeth (60); and
- the milling tool (1) is moved in relation to the workpiece (8) in axial direction (z) in step h to thereby gradually move the fourth cutting edge (24) in a direction towards said second one (9b) of the two end faces of the workpiece (8) during the chamfering of the fourth flank edges (64) of said teeth (60).

23. A computer program having instructions which when executed by a CNC machine causes the CNC machine to perform the steps according to any of claims 19-22.

## Patentansprüche

1. Fräswerkzeug zum Anfasen von Flankenkanten (61-64) von Innen- oder Außenzähnen (60) an einem zylindrischen verzahnten Werkstück (8) an wenigstens einer von zwei gegenüberliegenden Endflächen (9a, 9b) des Werkstücks (8), wobei das Fräswerkzeug (1) Folgendes aufweist:
- einen Werkzeugkörper (2), der an einem hinteren Ende (2b) einen hinteren Teil (6) aufweist, der zur Anbringung an einer Maschine ausgebildet ist, um eine Drehung des Werkzeugkörpers (2) durch die Maschine um eine Rotationsachse (3) des Werkzeugkörpers (2) zu ermöglichen, wobei der Werkzeugkörper (2) ein Schneidteil (10) enthält, das in einer axialen Richtung des Werkzeugkörpers (2) gesehen vor dem hinteren Teil (6) angeordnet ist, und
- wenigstens einen Schneideinsatz (20, 20'), der an dem Schneidteil (10) montiert ist,
**dadurch gekennzeichnet,**
- **dass** der wenigstens eine Schneideinsatz (20, 20') mit wenigstens einer ersten Schneidkante (21) und einer zweiten Schneidkante (22) versehen ist, die sich in einer gemeinsamen Erstreckungsebene (EP) erstrecken, die parallel zu einer Längsebene (LP) verläuft, die die Rotationsachse (3) einschließt, wobei die erste Schneidkante (21) und die zweite Schneidkante (22) einander gegenüberliegend auf gegenüberliegenden Seiten einer Radialebene (RP) angeordnet sind, die die Rotationsachse (3) einschließt und senkrecht zu der Längsebene (LP) verläuft, und wobei:
• die erste Schneidkante (21) ein hinteres Ende (21b) und ein gegenüberliegendes vorderes Ende (21a) aufweist, wobei das hintere Ende (21b) der ersten Schneidkante (21) näher am hinteren Teil (6) des Werkzeugkörpers angeordnet ist als das vordere Ende (21a) der ersten Schneidkante (21), wobei das vordere Ende (21a) der ersten Schneidkante (21) näher an der Radialebene (RP) angeordnet ist als das hintere Ende (21b) der ersten Schneidkante (21) und der Abstand zwischen der ersten Schneidkante (21) und der Radialebene (RP) in einer Richtung entlang der ersten Schneidkante (21) von deren vorderem Ende (21a) zu deren hinterem Ende (21b) betrachtet allmählich zunimmt, und
• die zweite Schneidkante (22) ein hinteres Ende (22b) und ein gegenüberliegendes vorderes Ende (22a) aufweist, wobei das hintere Ende (22b) der zweiten Schneidkante (22) näher am hinteren Teil (6) des Werkzeugkörpers angeordnet ist als das vordere Ende (22a) der zweiten Schneidkante (22),
wobei das vordere Ende (22a) der zweiten Schneidkante (22) näher an der Radialebene (RP) angeordnet ist als das hintere Ende (22b) der zweiten Schneidkante (22) und der Abstand zwischen der zweiten Schneidkante (22) und der Radialebene (RP) in einer Richtung entlang der zweiten Schneidkante (22) von deren vorderem Ende (22a) zu deren hinterem Ende (22b) betrachtet allmählich zunimmt, und
- **dass** der wenigstens eine Schneideinsatz (20, 20') eine Spanfläche (25) mit einer oder mehreren Spanflächen für die erste und zweite Schneidkante (21, 22) aufweist, wobei diese Spanfläche (25) radial nach außen von der Rotationsachse (3) weg weist.

2. Fräswerkzeug nach Anspruch 1, **dadurch gekennzeichnet, dass** die Spanfläche (25) planar ist und sich in derselben Erstreckungsebene (EP) wie die erste und zweite Schneidkante (21, 22) erstreckt.

3. Fräswerkzeug nach Anspruch 1 oder 2, **dadurch gekennzeichnet, dass**
- die erste Schneidkante (21) im Wesentlichen geradlinig ist und sich in einem Winkel (α1) zu der Radialebene (RP) erstreckt, der größer oder gleich 15° und kleiner als 85°, vorzugsweise 20-80°, ist, und
- die zweite Schneidkante (22) im Wesentlichen geradlinig ist und sich in einem Winkel (α2) zu der Radialebene (RP) erstreckt, der größer oder gleich 15° und kleiner als 85°, vorzugsweise 20-80°, ist.

4. Fräswerkzeug nach einem der Ansprüche 1 bis 3, **dadurch gekennzeichnet, dass** die erste Schneidkante (21) und die zweite Schneidkante (22) in Bezug auf die Radialebene (RP) spiegelbildlich zueinander sind.

5. Fräswerkzeug nach einem der Ansprüche 1 bis 4, **dadurch gekennzeichnet,**
- **dass** der wenigstens eine Schneideinsatz (20, 20') auch mit einer dritten Schneidkante (23) und einer vierten Schneidkante (24) versehen ist, die sich in derselben Erstreckungsebene (EP) wie die erste und zweite Schneidkante (21, 22) erstrecken, wobei die dritte Schneidkante (23) und die vierte Schneidkante (24) einander auf gegenüberliegenden Seiten der Radialebene (RP) gegenüberliegen, und wobei:
• die dritte Schneidkante (23) ein hinteres Ende (23b) und ein gegenüberliegendes vorderes Ende (23a) aufweist, wobei das hintere Ende (23b) der dritten Schneidkante (23) näher am hinteren Teil (6) des Werkzeugkörpers angeordnet ist als das vordere Ende (23a) der dritten Schneidkante (23), wobei das hintere Ende (23b) der dritten Schneidkante (23) näher an der Radialebene (RP) angeordnet ist als das vordere Ende (23a) der dritten Schneidkante (23) und der Abstand zwischen der dritten Schneidkante (23) und der Radialebene (RP) in einer Richtung entlang der dritten Schneidkante (23) von deren hinterem Ende (23b) zu deren vorderem Ende (23a) betrachtet allmählich zunimmt, und
• die vierte Schneidkante (24) ein hinteres Ende (24b) und ein gegenüberliegendes vorderes Ende (24a) aufweist, wobei das hintere Ende (24b) der vierten Schneidkante (24) näher an dem hinteren Teil (6) des Werkzeugkörpers angeordnet ist als das vordere Ende (24a) der vierten Schneidkante (24), wobei das hintere Ende (24b) der vierten Schneidkante (24) näher an der Radialebene (RP) angeordnet ist als das vordere Ende (24a) der vierten Schneidkante (24) und der Abstand zwischen der vierten Schneidkante (24) und der Radialebene (RP) in einer Richtung entlang der vierten Schneidkante (24) von deren hinterem Ende (24b) zu deren vorderem Ende (24a) betrachtet allmählich zunimmt, und
- **dass** die Spanfläche (25) mit einer oder mehreren Spanflächen auch für die dritte und vierte Schneidkante (23, 24) bereitgestellt ist.

6. Fräswerkzeug nach Anspruch 5, **dadurch gekennzeichnet, dass** die dritte Schneidkante (23) und die vierte Schneidkante (24) in Bezug auf die Radialebene (RP) spiegelbildlich zueinander sind.

7. Fräswerkzeug nach Anspruch 5 oder 6, **dadurch gekennzeichnet,**
- **dass** die erste Schneidkante (21) und die dritte Schneidkante (23) zueinander spiegelbildlich zu einer Symmetrieebene (PS) sind, die sich in der Mitte zwischen der ersten und dritten Schneidkante (21, 23) senkrecht zu der Radialebene (RP) und senkrecht zu der Erstreckungsebene (EP) erstreckt, und
- **dass** auch die zweite Schneidkante (22) und die vierte Schneidkante (24) in Bezug auf die Symmetrieebene (PS) spiegelbildlich zueinander sind.

8. Fräswerkzeug nach einem der Ansprüche 5-7, **dadurch gekennzeichnet, dass** der wenigstens eine Schneideinsatz (20) ein Basisteil (27) und einen Erstreckungsarm (28) enthält, der an dem Basisteil (27) stabil befestigt ist und von diesem vorsteht, wobei der Verlängerungsarm (28) ein dem Basisteil (27) zugewandtes inneres Ende (28a) und ein gegenüberliegendes äußeres Ende (28b) aufweist, wobei die Schneidkanten (21-24) und die Spanfläche (25) an dem Verlängerungsarm (28) an dessen äußerem Ende (28b) angeordnet sind, und wobei das Basisteil (27) so eingerichtet ist, dass es in einem Einsatzsitz (11) im Schneidteil (10) aufgenommen werden kann, und der Verlängerungsarm (28) so eingerichtet ist, dass er aus dem Schneidteil (10) in radialer Richtung in Bezug auf die Rotationsachse (3) vorsteht, wenn der Schneideinsatz (20) am Schneidteil (10) montiert ist.

9. Fräswerkzeug nach Anspruch 8, **dadurch gekennzeichnet, dass** der Verlängerungsarm (28) eine Länge von 1 bis 20 mm, vorzugsweise 1 bis 15 mm, noch bevorzugter 3 bis 9 mm aufweist.

10. Fräswerkzeug nach Anspruch 8 oder 9, **dadurch gekennzeichnet,**
- **dass** der Werkzeugkörper (2) einen länglichen Schaftteil (40) aufweist, der das Schneidteil (10) trägt und sich vom Schneidteil (10) zum hinteren Teil (6) erstreckt und der ein dem Schneidteil (10) zugewandtes vorderes Ende (40a) aufweist, einem gegenüberliegenden hinteren Ende (40b) und einer Umfangsfläche (41), die sich zwischen dem hinteren Ende (40b) und dem vorderen Ende (40a) um den Schaftteil (40) herum erstreckt, wobei der Schaftteil (40) eine Längsmittelachse aufweist, die mit der Rotationsachse (3) des Werkzeugkörpers (2) zusammenfällt, und
- **dass** das innere Ende (28a) des Verlängerungsarms (28) in einem größeren Abstand von der Rotationsachse (3) angeordnet ist als ein radial äußerster Teil der Umfangsfläche (41) des Schaftteils (40), wenn der Schneideinsatz (20) an dem Schneidteil (10) montiert ist.

11. Fräswerkzeug nach Anspruch 10, **dadurch gekennzeichnet, dass** das Schneidteil (10) an seinem vorderen Ende (40a) verschiebbar an dem Schaftteil (40) montiert ist, so dass es in Bezug auf das Schaftteil (40) senkrecht zur Rotationsachse (3) und in einer Längsrichtung des Verlängerungsarms (28) linear verschiebbar ist, wobei das Schneidteil (10) in verschiedenen Verschiebestellungen relativ zum Schaftteil (40) am Schaftteil (40) arretierbar ist, um dadurch eine Einstellung des radialen Abstands zwischen der Erstreckungsebene (EP) und der Rotationsachse (3) zu ermöglichen.

12. Fräswerkzeug nach Anspruch 10, **dadurch gekennzeichnet, dass** das Schneidteil (10) und das Schaftteil (40) einstückig ausgebildet sind.

13. Fräswerkzeug nach einem der Ansprüche 10-12, **dadurch gekennzeichnet, dass** der Schaftteil (40) stabförmig ist.

14. Fräswerkzeug nach einem der Ansprüche 10-13, **dadurch gekennzeichnet, dass** der Schaftteil (40) eine Länge (L) von 50-200 mm, vorzugsweise 100-150 mm aufweist.

15. Fräswerkzeug nach einem der Ansprüche 5 bis 7, **dadurch gekennzeichnet, dass** der Schneidteil (10) eine scheibenförmige oder zylindrische Basis (32) mit einer Mittelachse, die mit der Rotationsachse (3) zusammenfällt, und wenigstens einen Verlängerungsarm (33) aufweist, der an der Basis (32) stabil befestigt ist und von der Basis (32) in radialer Richtung in Bezug auf die Rotationsachse (3) vorsteht, wobei der Verlängerungsarm (33) ein der Basis (32) zugewandtes inneres Ende (33a) und ein gegenüberliegendes äußeres Ende (33b) aufweist, wobei der wenigstens eine Schneideinsatz (20') an dem Verlängerungsarm (33) an dessen äußerem Ende (33b) montiert ist.

16. Fräswerkzeug nach Anspruch 15, **dadurch gekennzeichnet, dass** der radiale Abstand zwischen der Erstreckungsebene (EP) und einem radial äußersten Teil der Basis (32) 5 bis 40 mm, vorzugsweise 7 bis 30 mm, noch bevorzugter 9 bis 22 mm beträgt.

17. Fräswerkzeug nach Anspruch 15 oder 16, **dadurch gekennzeichnet, dass** der wenigstens eine Schneideinsatz (20') lösbar an einem Einsatzsitz (35) montiert ist, der am äußeren Ende (33b) des zugehörigen Verlängerungsarms (33) vorgesehen ist.

18. Fräswerkzeug nach einem der Ansprüche 15 bis 17, **dadurch gekennzeichnet, dass** der Schneidteil (10) zwei oder mehr derartige Verlängerungsarme (33) aufweist, die gleichmäßig oder wenigstens im Wesentlichen gleichmäßig um die Mittelachse der Basis (32) verteilt sind, wobei die Anzahl der Schneideinsätze (20') des Fräswerkzeugs (1) der Anzahl der Verlängerungsarme (33) entspricht, wobei jeder Schneideinsatz (20') an einem jeweiligen der Verlängerungsarme (33) an dessen äußerem Ende (33b) montiert ist.

19. Verfahren zum Anfasen von Flankenkanten von Innen- oder Außenzähnen (60) an einem zylindrischen verzahnten Werkstück (8) an wenigstens einer von zwei gegenüberliegenden Endflächen (9a, 9b) des Werkstücks (8), wobei jeder der Zähne (60) eine Zahnspitze (65), eine Zahnwurzel (66), eine erste Zahnflankenfläche (67a), die sich zwischen der Zahnspitze (65) und der Zahnwurzel (66) auf einer ersten Seite des Zahns erstreckt, und eine zweite Zahnflankenfläche (67b) aufweist, die sich zwischen der Zahnspitze (65) und der Zahnwurzel (66) auf einer gegenüberliegenden zweiten Seite des Zahns erstreckt, wobei eine erste Flankenkante (61) an einem Übergang zwischen der ersten Zahnflankenfläche (67a) und einer ersten (9a) der beiden Endflächen des Werkstücks (8) ausgebildet ist und eine zweite Flankenkante (62) an einem Übergang zwischen der zweiten Zahnflankenfläche (67b) und der ersten (9a) der beiden Endflächen des Werkstücks (8) ausgebildet ist, wobei das Werkstück (8) durch eine Maschine um eine Mittelachse (4) des Werkstücks (8) rotierbar ist und wobei das Anfasen mittels eines Fräswerkzeugs (1) gemäß einem der Ansprüche 1 bis 18 erfolgt, das durch die Maschine um die Rotationsachse (3) des Werkzeugkörpers (2) rotierbar ist, wobei das Verfahren die folgenden Schritte aufweist:
a) Positionieren des Fräswerkzeugs (1) in einer ersten vorbestimmten Position in Bezug auf das Werkstück (8) mit der Rotationsachse (3) des Werkzeugkörpers (2) parallel zur Mittelachse (4) des Werkstücks (8) und mit dem Schneidteil (10) des Werkzeugkörpers (2) benachbart zu der ersten (9a) der beiden Endflächen des Werkstücks (8) und mit der ersten und zweiten Schneidkante (21, 22) dieser Endfläche (9a) zugewandt,
b) Drehen des Werkstücks (8) um seine Mittelachse (4) in einer Rotationsrichtung (R1) mit den zweiten Zahnflankenflächen (67b) als führenden Zahnflankenflächen und den ersten Zahnflankenflächen (67a) als nachlaufenden Zahnflankenflächen und gleichzeitiges Drehen des Fräswerkzeugs (1) um die Rotationsachse (3) des Werkzeugkörpers (2), mit einem vorbestimmten Verhältnis zwischen der Drehgeschwindigkeit des Fräswerkzeugs (1) und der Drehgeschwindigkeit des Werkstücks (8), in derselben Rotationsrichtung (R1) wie das Werkstück (8), wenn die Zähne (60) Innenzähne am Werkstück (8) sind, oder in einer entgegengesetzten Rotationsrichtung (R2), wenn die Zähne (60) Außenzähne am Werkstück (8) sind, wobei die Rotationsachse (3) des Werkzeugkörpers (2) parallel zur Mittelachse (4) des Werkstücks (8) gehalten wird und die erste Schneidkante (21) als vordere Schneidkante und die zweite Schneidkante (22) als hintere Schneidkante derart, dass die erste Schneidkante (21) wenigstens einen Teil der ersten Flankenkante (61) der Zähne (60) von der Zahnspitze (65) in Richtung die Zahnwurzel (66) jedes Zahnes (60) anfast,
c) Positionieren des Fräswerkzeugs (1) in einer zweiten vorbestimmten Position in Bezug auf das Werkstück (8) mit der Rotationsachse (3) des Werkzeugkörpers (2) parallel zur zentralen Achse (4) des Werkstücks (8) und mit dem Schneidteil (10) des Werkzeugkörpers (2) benachbart zu der einen (9a) der beiden Endflächen des Werkstücks (8) und mit der ersten und der zweiten Schneidkante (21, 22) dieser Endfläche (9a) zugewandt, und
d) Drehen des Werkstücks (8) um seine Mittelachse (4) in einer Rotationsrichtung (R2) mit den ersten Zahnflanken (67a) als vordere Zahnflanken und den zweiten Zahnflanken (67b) als hintere Zahnflanken und gleichzeitiges Drehen des Fräswerkzeugs (1) um die Rotationsachse (3) des Werkzeugkörpers (2) mit einem vorbestimmten Verhältnis zwischen der Drehgeschwindigkeit des Fräswerkzeugs (1) und der Drehgeschwindigkeit des Werkstücks (8), in derselben Rotationsrichtung (R2) wie das Werkstück (8), wenn die Zähne (60) Innenzähne am Werkstück (8) sind, oder in einer entgegengesetzten Rotationsrichtung (R1), wenn die Zähne (60) Außenzähne am Werkstück (8) sind, während die Rotationsachse (3) des Werkzeugkörpers (2) parallel zur Mittelachse (4) des Werkstücks (8) gehalten wird und die zweite Schneidkante (22) als vordere Schneidkante und die erste Schneidkante (21) als hintere Schneidkante derart, dass die zweite Schneidkante (22) wenigstens einen Teil der zweiten Flankenkante (62) der Zähne (60) von der Zahnspitze (65) in Richtung die Zahnwurzel (66) jedes Zahnes (60) hin anfast.

20. Verfahren nach Anspruch 19, wobei:
- das Fräswerkzeug (1) in Schritt b relativ zum Werkstück (8) in axialer Richtung (z) bewegt wird, um dadurch die erste Schneidkante (21) während des Anfasens der ersten Flankenkante (61) der Zähne (60) allmählich in Richtung auf die erste (9a) der beiden Endflächen des Werkstücks (8) zu bewegen, und
- das Fräswerkzeug (1) in Schritt d in axialer Richtung (z) relativ zum Werkstück (8) bewegt wird, um dadurch die zweite Schneidkante (22) während des Anfasens der zweiten Flankenkante (62) der Zähne (60) allmählich in Richtung auf die erste (9a) der beiden Endflächen des Werkstücks (8) zu bewegen.

21. Verfahren nach Anspruch 19 oder 20, wobei eine dritte Flankenkante (63) an einem Übergang zwischen der ersten Zahnflankenfläche (67a) jedes der Zähne (60) und einer zweiten (9b) der beiden Endflächen des Werkstücks (8) ausgebildet ist und eine vierte Flankenkante (64) an einem Übergang zwischen der zweiten Zahnflankenfläche (67b) jedes der Zähne (60) und der zweiten (9b) der beiden Endflächen des Werkstücks (8) ausgebildet ist, und wobei das Fräswerkzeug (1) ein Fräswerkzeug gemäß einem der Ansprüche 5 bis 18 ist, wobei das Verfahren die folgenden zusätzlichen Schritte aufweist:
e) Positionieren des Fräswerkzeugs (1) in einer dritten vordefinierten Position in Bezug auf das Werkstück (8), wobei die Rotationsachse (3) des Werkzeugkörpers (2) parallel zur Mittelachse (4) des Werkstücks (8) verläuft und der Schneidteil (10) des Werkzeugkörpers (2) an die zweite (9b) der beiden Endflächen des Werkstücks (8) angrenzt und die dritte und vierte Schneidkante (23, 24) dieser Endfläche (9b) zugewandt,
f) Drehen des Werkstücks (8) um seine Mittelachse (4) in einer Rotationsrichtung (R1) mit den zweiten Zahnflankenflächen (67b) als führenden Zahnflankenflächen und den ersten Zahnflankenflächen (67a) als nachlaufenden Zahnflankenflächen und gleichzeitiges Drehen des Fräswerkzeugs (1) um die Rotationsachse (3) des Werkzeugkörpers (2), mit einem vorbestimmten Verhältnis zwischen der Drehgeschwindigkeit des Fräswerkzeugs (1) und der Drehgeschwindigkeit des Werkstücks (8), in derselben Rotationsrichtung (R1) wie das Werkstück (8), wenn die Zähne (60) Innenzähne am Werkstück (8) sind, oder in einer entgegengesetzten Rotationsrichtung (R2), wenn die Zähne (60) Außenzähne am Werkstück (8) sind, wobei die Rotationsachse (3) des Werkzeugkörpers (2) parallel zur Mittelachse (4) des Werkstücks (8) gehalten wird und die dritte Schneidkante (23) als vordere Schneidkante und die vierte Schneidkante (24) als hintere Schneidkante derart, dass die dritte Schneidkante (23) wenigstens einen Teil der dritten Flankenkante (63) der Zähne (60) von der Zahnspitze (65) zur Zahnwurzel (66) der Zähne (60) anfast,
g) Positionieren des Fräswerkzeugs (1) in einer vierten vorbestimmten Position in Bezug auf das Werkstück (8) mit der Rotationsachse (3) des Werkzeugkörpers (2) parallel zur zentralen Achse (4) des Werkstücks (8) und mit dem Schneidteil (10) des Werkzeugkörpers (2) benachbart zu der zweiten (9b) der beiden Endflächen des Werkstücks (8) und mit der dritten und vierten Schneidkante (23, 24) dieser Endfläche (9b) zugewandt, und
h) Drehen des Werkstücks (8) um seine Mittelachse (4) in einer Rotationsrichtung (R2) mit den ersten Zahnflankenflächen (67a) als vorlaufende Zahnflankenflächen und den zweiten Zahnflankenflächen (67b) als nacheilende Zahnflankenflächen und gleichzeitiges Drehen des Fräswerkzeugs (1) um die Rotationsachse (3) des Werkzeugkörpers (2), mit einem vorbestimmten Verhältnis zwischen der Drehgeschwindigkeit des Fräswerkzeugs (1) und der Drehgeschwindigkeit des Werkstücks (8), in derselben Rotationsrichtung (R2) wie das Werkstück (8), wenn die Zähne (60) Innenzähne am Werkstück (8) sind, oder in einer entgegengesetzten Rotationsrichtung (R1), wenn die Zähne (60) Außenzähne am Werkstück (8) sind, während die Rotationsachse (3) des Werkzeugkörpers (2) parallel zur Mittelachse (4) des Werkstücks (8) und mit der vierten Schneidkante (24) als vordere Schneidkante und der dritten Schneidkante (23) als hintere Schneidkante derart gehalten wird, dass die vierte Schneidkante (24) wenigstens einen Teil der vierten Flankenkante (64) der Zähne (60) von der Zahnspitze (65) zur Zahnwurzel (66) der Zähne (60) anfast.

22. Verfahren nach Anspruch 21, wobei:
- das Fräswerkzeug (1) in Schritt f relativ zum Werkstück (8) in axialer Richtung (z) bewegt wird, um dadurch die dritte Schneidkante (23) während des Anfasens der dritten Flankenkante (63) der Zähne (60) allmählich in Richtung auf die zweite (9b) der beiden Endflächen des Werkstücks (8) zu bewegen, und
- das Fräswerkzeug (1) in Schritt h in axialer Richtung (z) relativ zum Werkstück (8) bewegt wird, um dadurch die vierte Schneidkante (24) während des Anfasens der vierten Flankenkante (64) der Zähne (60) allmählich in Richtung auf die zweite (9b) der beiden Endflächen des Werkstücks (8) zu bewegen.

23. Computerprogramm mit Befehlen, die, wenn sie von einer CNC-Maschine ausgeführt werden, die CNC-Maschine veranlassen, die Schritte gemäß einem der Ansprüche 19 bis 22 auszuführen.

## Revendications

1. Outil de fraisage pour le chanfreinage de bords de flanc (61 à 64) de dents internes ou externes (60) sur une pièce à usiner dentée cylindrique (8) au niveau d'au moins une de deux faces d'extrémité opposées (9a, 9b) de la pièce à usiner (8), l'outil de fraisage (1) comprenant :
- un corps d'outil (2), lequel au niveau d'une extrémité arrière (2b) présente une partie arrière (6) configurée pour être attachée à une machine de sorte à permettre au corps d'outil (2) d'être entraîné en rotation par la machine autour d'un axe de rotation (3) du corps d'outil (2), où le corps d'outil (2) comprend une partie de coupe (10) située devant la partie arrière (6) selon une vue dans une direction axiale du corps d'outil (2) ; et
- au moins une plaquette de coupe (20, 20') montée sur la partie de coupe (10),
**caractérisé en ce :**
- **que** ladite au moins une plaquette de coupe (20, 20') est dotée d'au moins une première arête de coupe (21) et d'une deuxième arête de coupe (22) s'étendant dans un plan d'extension commun (LP) qui contient l'axe de rotation (3), où la première arête de coupe (21) et la deuxième arête de coupe (22) sont situées de manière opposée sur des côtés opposés d'un plan radial (RP) qui contient l'axe de rotation (3) et est perpendiculaire audit plan longitudinal (LP), et où :
• la première arête de coupe (21) présente une extrémité arrière (21b) et une extrémité avant opposée (21a), l'extrémité arrière (21b) de la première arête de coupe (21) étant située plus près de la partie arrière (6) du corps d'outil que l'extrémité avant (21a) de la première arête de coupe (21), où l'extrémité avant (21a) de la première arête de coupe (21) est située plus près dudit plan radial (RP) que l'extrémité arrière (21b) de la première arête de coupe (21) et la distance entre la première arête de coupe (21) et ledit plan radial (RP) augmente progressivement selon une vue dans une direction le long de la première arête de coupe (21) depuis l'extrémité avant (21a) de celle-ci vers l'extrémité arrière (21b) de celle-ci, et
• la deuxième arête de coupe (22) présente une extrémité arrière (22b) et une extrémité avant opposée (22a), l'extrémité arrière (22b) de la deuxième arête de coupe (22) étant située plus près de la partie arrière (6) du corps d'outil que l'extrémité avant (22a) de la deuxième arête de coupe (22), où l'extrémité avant (22a) de la deuxième arête de coupe (22) est située plus près dudit plan radial (RP) que l'extrémité arrière (22b) de la deuxième arête de coupe (22) et la distance entre la deuxième arête de coupe (22) et ledit plan radial (RP) augmente progressivement selon une vue dans une direction le long de la deuxième arête de coupe (22) depuis l'extrémité avant (22a) de celle-ci vers l'extrémité arrière (22b) de celle-ci ; et
- **que** ladite au moins une plaquette de coupe (20, 20') présente une face d'attaque (25) avec une ou plusieurs surfaces d'attaque pour les première et deuxième arêtes de coupe (21, 22), où cette face d'attaque (25) est orientée radialement vers l'extérieur vers l'opposé de l'axe de rotation (3).

2. Outil de fraisage selon la revendication 1, **caractérisé en ce que** ladite face d'attaque (25) est plane et s'étend dans le même plan d'extension (EP) que les première et deuxième arêtes de coupe (21, 22).

3. Outil de fraisage selon la revendication 1 ou 2, **caractérisé en ce :**
- **que** la première arête de coupe (21) est sensiblement rectiligne et s'étend à un angle (α₁) par rapport audit plan radial (RP) qui est supérieur ou égal à 15° et inférieur à 85°, de préférence compris entre 20 et 80° ; et
- **que** la deuxième arête de coupe (22) est sensiblement rectiligne et s'étend à un angle (α₂) par rapport audit plan radial (RP) qui est supérieur ou égal à 15° et inférieur à 85°, de préférence compris entre 20 et 80°.

4. Outil de fraisage selon l'une quelconque des revendications 1 à 3, **caractérisé en ce que** la première arête de coupe (21) et la deuxième arête de coupe (22) sont symétriques en miroir l'une par rapport à l'autre par rapport audit plan radial (RP).

5. Outil de fraisage selon l'une quelconque des revendications 1 à 4, **caractérisé en ce :**
- **que** ladite au moins une plaquette de coupe (20, 20') est également dotée d'une troisième arête de coupe (23) et d'une quatrième arête de coupe (24) s'étendant dans le même plan d'extension (EP) que les première et deuxième arêtes de coupe (21, 22), où la troisième arête de coupe (23) et la quatrième arête de coupe (24) sont situées de manière opposée sur des côtés opposés dudit plan radial (RP), et où :
• la troisième arête de coupe (23) présente une extrémité arrière (23b) et une extrémité avant opposée (23a), l'extrémité arrière (23b) de la troisième arête de coupe (23) étant située plus près de la partie arrière (6) du corps d'outil que l'extrémité avant (23a) de la troisième arête de coupe (23), où l'extrémité arrière (23b) de la troisième arête de coupe (23) est située plus près dudit plan radial (RP) que l'extrémité avant (23a) de la troisième arête de coupe (23) et la distance entre la troisième arête de coupe (23) et ledit plan radial (RP) augmente progressivement selon une vue dans une direction le long de la troisième arête de coupe (23) depuis l'extrémité arrière (23b) de celle-ci vers l'extrémité avant (23a) de celle-ci, et
• la quatrième arête de coupe (24) présente une extrémité arrière (24b) et une extrémité avant opposée (24a), l'extrémité arrière (24b) de la quatrième arête de coupe (24) étant située plus près de la partie arrière (6) du corps d'outil que l'extrémité avant (24a) de la quatrième arête de coupe (24), où l'extrémité arrière (24b) de la quatrième arête de coupe (24) est située plus près dudit plan radial (RP) que l'extrémité avant (24a) de la quatrième arête de coupe (24) et la distance entre la quatrième arête de coupe (24) et ledit plan radial (RP) augmente progressivement selon une vue dans une direction le long de la quatrième arête de coupe (24) depuis l'extrémité arrière (24b) de celle-ci vers l'extrémité avant (24a) de celle-ci ; et
- **que** ladite face d'attaque (25) est dotée d'une ou plusieurs surfaces d'attaque également pour les troisième et quatrième arêtes de coupe (23, 24).

6. Outil de fraisage selon la revendication 5, **caractérisé en ce que** la troisième arête de coupe (23) et la quatrième arête de coupe (24) sont symétriques en miroir l'une par rapport à l'autre par rapport audit plan radial (RP).

7. Outil de fraisage selon la revendication 5 ou 6, **caractérisé en ce :**
- **que** la première arête de coupe (21) et la troisième arête de coupe (23) sont symétriques en miroir l'une par rapport à l'autre par rapport à un plan de symétrie (PS) qui s'étend à mi-chemin entre les première et troisième arêtes de coupe (21, 23) perpendiculairement audit plan radial (RP) et perpendiculairement audit plan d'extension (EP) ; et
- **que** également la deuxième arête de coupe (22) et la quatrième arête de coupe (24) sont symétriques en miroir l'une par rapport à l'autre par rapport audit plan de symétrie (PS).

8. Outil de fraisage selon l'une quelconque des revendications 5 à 7, **caractérisé en ce que** ladite au moins une plaquette de coupe (20) comprend une partie de base (27) et un bras d'extension (28) fixé sur et dépassant de la partie de base (27), où le bras d'extension (28) présente une extrémité intérieure (28a) faisant face à la partie de base (27) et une extrémité extérieure opposée (28b), lesdites arêtes de coupe (21 à 24) et ladite face d'attaque (25) étant agencées sur le bras d'extension (28) au niveau de l'extrémité extérieure (28b) de celui-ci, et où la partie de base (27) est configurée pour être reçue dans un siège de plaquette (11) dans la partie de coupe (10) et le bras d'extension (28) est configuré pour dépasser de la partie de coupe (10) dans une direction radiale par rapport à l'axe de rotation (3) lorsque la plaquette de coupe (20) est montée sur la partie de coupe (10).

9. Outil de fraisage selon la revendication 8, **caractérisé en ce que** le bras d'extension (28) présente une longueur de 1 à 20 mm, de préférence de 1 à 15 mm, de façon davantage préférée de 3 à 9 mm.

10. Outil de fraisage selon la revendication 8 ou 9, **caractérisé en ce :**
- **que** ledit corps d'outil (2) comprend une partie de queue allongée (40), laquelle porte la partie de coupe (10) et s'étend de la partie de coupe (10) vers la partie arrière (6) et laquelle présente une extrémité avant (40a) faisant face à la partie de coupe (10), une extrémité arrière opposée (40b) et une surface périphérique (41) s'étendant autour de la partie de queue (40) entre l'extrémité arrière (40b) et l'extrémité avant (40a) de celle-ci, où la partie de queue (40) présente un axe central longitudinal qui coïncide avec l'axe de rotation (3) du corps d'outil (2) ; et
- **que** l'extrémité intérieure (28a) du bras d'extension (28) est située à une plus grande distance de l'axe de rotation (3) qu'une partie radialement la plus à l'extérieur de la surface périphérique (41) de la partie de queue (40) lorsque la plaquette de coupe (20) est montée sur la partie de coupe (10).

11. Outil de fraisage selon la revendication 10, **caractérisé en ce que** la partie de coupe (10) est montée avec possibilité de coulissement sur la partie de queue (40) au niveau de l'extrémité avant (40a) de celle-ci de sorte à pouvoir coulisser linéairement par rapport à la partie de queue (40) perpendiculairement à l'axe de rotation (3) et dans une direction longitudinale du bras d'extension (28), où la partie de coupe (10) est verrouillable sur la partie de queue (40) dans différentes positions de coulissement par rapport à la partie de queue (40) pour permettre ainsi un réglage de la distance radiale entre ledit plan d'extension (EP) et l'axe de rotation (3).

12. Outil de fraisage selon la revendication 10, **caractérisé en ce que** la partie de coupe (10) et la partie de queue (40) sont formées en un seul tenant.

13. Outil de fraisage selon l'une quelconque des revendications 10 à 12, **caractérisé en ce que** la partie de queue (40) est en forme de tige.

14. Outil de fraisage selon l'une quelconque des revendications 10 à 13, **caractérisé en ce que** la partie de queue (40) présente une longueur (L) de 50 à 200 mm, de préférence de 100 à 150 mm.

15. Outil de fraisage selon l'une quelconque des revendications 5 à 7, **caractérisé en ce que** la partie de coupe (10) comprend une base cylindrique ou en forme de disque (32) avec un axe central qui coïncide avec l'axe de rotation (3) et au moins un bras d'extension (33) fixé sur la base (32) et dépassant de la base (32) dans une direction radiale par rapport à l'axe de rotation (3), où le bras d'extension (33) présente une extrémité intérieure (33a) faisant face à la base (32) et une extrémité extérieure opposée (33b), ladite au moins une plaquette de coupe (20') étant montée sur le bras d'extension (33) au niveau de l'extrémité extérieure (33b) de celui-ci.

16. Outil de fraisage selon la revendication 15, **caractérisé en ce que** la distance radiale entre ledit plan d'extension (EP) et une partie radialement la plus à l'extérieur de la base (32) est de 5 à 40 mm, de préférence de 7 à 30 mm, de façon davantage préférée de 9 à 22 mm.

17. Outil de fraisage selon la revendication 15 ou 16, **caractérisé en ce que** ladite au moins une plaquette de coupe (20') est montée de manière détachable sur un siège de plaquette (35) ménagé au niveau de l'extrémité extérieure (33b) du bras d'extension associé (33).

18. Outil de fraisage selon l'une quelconque des revendications 15 à 17, **caractérisé en ce que** la partie de coupe (10) comprend deux tels bras d'extension (33) ou plus répartis régulièrement ou au moins sensiblement régulièrement autour de l'axe central de la base (32), où le nombre de plaquettes de coupe (20') de l'outil de fraisage (1) correspond au nombre de bras d'extension (33), chaque plaquette de coupe (20') étant montée sur un bras respectif parmi les bras d'extension (33) au niveau de l'extrémité extérieure de celui-ci.

19. Procédé de chanfreinage de bords de flanc de dents internes ou externes (60) sur une pièce à usiner dentée cylindrique (8) au niveau d'au moins une de deux faces d'extrémité opposées (9a, 9b) de la pièce à usiner (8), où chacune desdites dents (60) présente une pointe de dent (65), une racine de dent (66), une première surface de flanc de dent (67a) s'étendant entre la pointe de dent (65) et la racine de dent (66) sur un premier côté de la dent et une seconde surface de flanc de dent (67b) s'étendant entre la pointe de dent (65) et la racine de dent (66) sur un second côté opposé de la dent, un premier bord de flanc (61) étant formé au niveau d'une intersection entre la première surface de flanc de dent (67a) et une première (9a) de deux faces d'extrémité de la pièce à usiner (8) et un deuxième bord de flanc (62) étant formé au niveau d'une intersection entre la seconde surface de flanc de dent (67b) et ladite première (9a) des deux faces d'extrémité de la pièce à usiner (8), où la pièce à usiner (8) peut être entraînée en rotation par une machine autour d'un axe central (4) de la pièce à usiner (8) et où le chanfreinage es réalisé au moyen d'un outil de fraisage (1) selon l'une quelconque des revendications 1 à 18, lequel peut être entraîné en rotation par la machine autour de l'axe de rotation (3) du corps d'outil (2), le procédé comprenant les étapes suivantes consistant à :
a) positionner l'outil de fraisage (1) dans une première position prédéfinie par rapport à la pièce à usiner (8), l'axe de rotation (3) du corps d'outil (2) étant parallèle à l'axe central (4) de la pièce à usiner (8) et la partie de coupe (10) du corps d'outil (2) étant adjacente à ladite première (9a) des deux faces d'extrémité de la pièce à usiner (8) et les première et deuxième arêtes de coupe (21, 22) faisant face à cette face d'extrémité (9a) ;
b) entraîner en rotation la pièce à usiner (8) autour de son axe central (4) dans un sens de rotation (R1) avec les secondes surfaces de flanc de dent (67b) comme surfaces de flanc de dent avant et les premières surfaces de flanc de dent (67a ) comme surfaces de flanc de dent arrière et simultanément entraîner en rotation l'outil de fraisage (1) autour de l'axe de rotation (3) du corps d'outil (2), avec une relation prédéfinie entre la vitesse de rotation de l'outil de fraisage (1) et la vitesse de rotation de la pièce à usiner (8), dans le même sens de rotation (R1) que la pièce à usiner (8) lorsque lesdites dents (60) sont des dents internes sur la pièce à usiner (8) ou dans un sens de rotation opposé (R2) lorsque lesdites dents (60) sont des dents externes sur la pièce à usiner (8), tout en gardant l'axe de rotation (3) du corps d'outil (2) parallèle à l'axe central (4) de la pièce à usiner (8) et avec la première arête de coupe (21) comme arête de coupe avant et la deuxième arête de coupe (22) comme arête de coupe arrière de telle sorte que la première arête de coupe (21) chanfreine au moins une partie du premier bord de flanc (61) desdites dents (60) de la pointe de dent (65) vers la racine de dent (66) de chaque dent (60) ;
c) positionner l'outil de fraisage (1) dans une deuxième position prédéfinie par rapport à la pièce à usiner (8), l'axe de rotation (3) du corps d'outil (2) étant parallèle à l'axe central (4) de la pièce à usiner (8) et la partie de coupe (10) du corps d'outil (2) étant adjacente à ladite première (9a) des deux faces d'extrémité de la pièce à usiner (8) et les première et deuxième arêtes de coupe (21, 22) faisant face à cette face d'extrémité (9a) ; et
d) entraîner en rotation la pièce à usiner (8) autour de son axe central (4) dans un sens de rotation (R2) avec les premières surfaces de flanc de dent (67a) comme surfaces de flanc de dent avant et les secondes surfaces de flanc de dent (67b) comme surfaces de flanc de dent arrière et simultanément entraîner en rotation l'outil de fraisage (1) autour de l'axe de rotation (3) du corps d'outil (2), avec une relation prédéfinie entre la vitesse de rotation de l'outil de fraisage (1) et la vitesse de rotation de la pièce à usiner (8), dans le même sens de rotation (R2) que la pièce à usiner (8) lorsque lesdites dents (60) sont des dents internes sur la pièce à usiner (8) ou dans un sens de rotation opposé (R1) lorsque lesdites dents (60) sont des dents externes sur la pièce à usiner (8), tout en gardant l'axe de rotation (3) du corps d'outil (2) parallèle à l'axe central (4) de la pièce à usiner (8) et avec la deuxième arête de coupe (22) comme arête de coupe avant et la première arête de coupe (21) comme arête de coupe arrière de telle sorte que la deuxième arête de coupe (22) chanfreine au moins une partie du deuxième bord de flanc (62) desdites dents (60) de la pointe de dent (65) vers la racine de dent (66) de chaque dent (60).

20. Procédé selon la revendication 19, dans lequel :
- l'outil de fraisage (1) est déplacé par rapport à la pièce à usiner (8) dans une direction axiale (z) à l'étape b pour ainsi déplacer progressivement la première arête de coupe (21) dans une direction vers ladite première (9a) des deux faces d'extrémité de la pièce à usiner (8) durant le chanfreinage des premiers bords de flanc (61) desdites dents (60) ; et
- l'outil de fraisage (1) est déplacé par rapport à la pièce à usiner (8) dans une direction axiale (z) à l'étape d pour ainsi déplacer progressivement la deuxième arête de coupe (22) dans une direction vers ladite première (9a) des deux faces d'extrémité de la pièce à usiner (8) durant le chanfreinage des deuxièmes bords de flanc (62) desdites dents (60).

21. Procédé selon la revendication 19 ou 20, dans lequel un troisième bord de flanc (63) est formé au niveau d'une intersection entre la première surface de flanc de dent (67a) de chacune desdites dents (60) et une seconde (9b) des deux faces d'extrémité de la pièce à usiner (8) et un quatrième bord de flanc (64) est formé au niveau d'une intersection entre la seconde surface de flanc de dent (67b) de chacune desdites dents (60) et ladite seconde (9b) des deux faces d'extrémité de la pièce à usiner (8), et où ledit outil de fraisage (1) est un outil de fraisage selon l'une quelconque des revendications 5 à 18, le procédé comprenant les étapes supplémentaires suivantes consistant à :
e) positionner l'outil de fraisage (1) dans une troisième position prédéfinie par rapport à la pièce à usiner (8), l'axe de rotation (3) du corps d'outil (2) étant parallèle à l'axe central (4) de la pièce à usiner (8) et la partie de coupe (10) du corps d'outil (2) étant adjacente à ladite seconde (9b) des deux faces d'extrémité de la pièce à usiner (8) et les troisième et quatrième arêtes de coupe (23, 24) faisant face à cette face d'extrémité (9b) ;
f) entraîner en rotation la pièce à usiner (8) autour de son axe central (4) dans un sens de rotation (R1) avec les secondes surfaces de flanc de dent (67b) comme surfaces de flanc de dent avant et les premières surfaces de flanc de dent (67a ) comme surfaces de flanc de dent arrière et simultanément entraîner en rotation l'outil de fraisage (1) autour de l'axe de rotation (3) du corps d'outil (2), avec une relation prédéfinie entre la vitesse de rotation de l'outil de fraisage (1) et la vitesse de rotation de la pièce à usiner (8), dans le même sens de rotation (R1) que la pièce à usiner (8) lorsque lesdites dents (60) sont des dents internes sur la pièce à usiner (8) ou dans un sens de rotation opposé (R2) lorsque lesdites dents (60) sont des dents externes sur la pièce à usiner (8), tout en gardant l'axe de rotation (3) du corps d'outil (2) parallèle à l'axe central (4) de la pièce à usiner (8) et avec la troisième arête de coupe (23) comme arête de coupe avant et la quatrième arête de coupe (24) comme arête de coupe arrière de telle sorte que la troisième arête de coupe (23) chanfreine au moins une partie du troisième bord de flanc (63) desdites dents (60) de la pointe de dent (65) vers la racine de dent (66) de chaque dent (60) ;
g) positionner l'outil de fraisage (1) dans une quatrième position prédéfinie par rapport à la pièce à usiner (8), l'axe de rotation (3) du corps d'outil (2) étant parallèle à l'axe central (4) de la pièce à usiner (8) et la partie de coupe (10) du corps d'outil (2) étant adjacente à ladite seconde (9b) des deux faces d'extrémité de la pièce à usiner (8) et les troisième et quatrième arêtes de coupe (23, 24) faisant face à cette face d'extrémité (9b) ; et
h) entraîner en rotation la pièce à usiner (8) autour de son axe central (4) dans un sens de rotation (R2) avec les premières surfaces de flanc de dent (67a) comme surfaces de flanc de dent avant et les secondes surfaces de flanc de dent (67b) comme surfaces de flanc de dent arrière et simultanément entraîner en rotation l'outil de fraisage (1) autour de l'axe de rotation (3) du corps d'outil (2), avec une relation prédéfinie entre la vitesse de rotation de l'outil de fraisage (1) et la vitesse de rotation de la pièce à usiner (8), dans le même sens de rotation (R2) que la pièce à usiner (8) lorsque lesdites dents (60) sont des dents internes sur la pièce à usiner (8) ou dans un sens de rotation opposé (R1) lorsque lesdites dents (60) sont des dents externes sur la pièce à usiner (8), tout en gardant l'axe de rotation (3) du corps d'outil (2) parallèle à l'axe central (4) de la pièce à usiner (8) et avec la quatrième arête de coupe (24) comme arête de coupe avant et la troisième arête de coupe (23) comme arête de coupe arrière de telle sorte que la quatrième arête de coupe (24) chanfreine au moins une partie du quatrième bord de flanc (64) desdites dents (60) de la pointe de dent (65) vers la racine de dent (66) de chaque dent (60).

22. Procédé selon la revendication 21, dans lequel :
- l'outil de fraisage (1) est déplacé par rapport à la pièce à usiner (8) dans une direction axiale (z) à l'étape f pour ainsi déplacer progressivement la troisième arête de coupe (23) dans une direction vers ladite seconde (9b) des deux faces d'extrémité de la pièce à usiner (8) durant le chanfreinage des troisièmes bords de flanc (63) desdites dents (60) ; et
- l'outil de fraisage (1) est déplacé par rapport à la pièce à usiner (8) dans une direction axiale (z) à l'étape h pour ainsi déplacer progressivement la quatrième arête de coupe (24) dans une direction vers ladite seconde (9b) des deux faces d'extrémité de la pièce à usiner (8) durant le chanfreinage des quatrièmes bords de flanc (64) desdites dents (60).

23. Programme informatique présentant des instructions qui lorsqu'elles sont exécutées par une machine CNC amène la machine CNC à réaliser les étapes selon l'une quelconque des revendications 19 à 22.
